# EUROPÄISCHE PATENTSCHRIFT

(11) **EP 2 158 387 B1**
(45) Veröffentlichungstag und Bekanntmachung des Hinweises auf die Patenterteilung: **10.04.2013**
(21) Anmeldenummer: 08749032.2
(22) Anmeldetag: 15.04.2008
(51) Int. Cl.: F02B 39/10, H02K 5/128, H02K 7/14, H02K 7/18, F03B 17/06, H02K 5/12, F01D 5/02, F04D 25/06

(54) **Verdichteranordnung**
Compressor assembly
Ensemble de compresseur

(30) Priorität: 24.05.2007 EP 07090100; 24.05.2007 EP 07075981; 20.06.2007 EP 07075496; 23.07.2007 US 781644; 23.07.2007 US 781684; 01.08.2007 EP 07075661; 25.10.2007 WO PCT/EP2007/009446; 25.10.2007 WO PCT/EP2007/009445; 23.11.2007 US 915350; 23.11.2007 US 915353
(43) Veröffentlichungstag der Anmeldung: 03.03.2010
(73) Patentinhaber: Lindenmaier GmbH, 88487 Baltringen (DE); SycoTec GmbH & Co. KG, 88299 Leutkirch im Allgäu (DE)
(72) Erfinder: GÖDECKE, Holger, 88480 Achstetten (DE); LÖFFLER, Rudolf, 88454 Unteressendorf (DE); HEBER, Ralf, 89155 Erbach-Ersingen (DE); BISCHOF, Thomas, 87758 Illerbeuren (DE); MAIER, Sandra, 88410 Bad Wurznach (DE); KÄMPFER, Oliver, 87700 Memmingen (DE)
(74) Vertreter: Pfenning, Meinig & Partner GbR
(86) Internationale Anmeldenummer: PCT/EP2008/003197
(87) Internationale Veröffentlichungsnummer: WO 2008/141710

(56) Entgegenhaltungen:
- EP-A- 0 642 210
- GB-A- 895 616
- US-A- 5 904 471

## Beschreibung

Die Erfindung bezieht sich auf Verdichteranordnungen, insbesondere auf Turbolader.

Verbrennungskraftmaschinen mit Turboladern sind prinzipiell bekannt. Typischerweise wird ein Abgasstrom aus einer Verbrennungskraftmaschine heraus genutzt, um ein Turbinenrad anzutreiben. Dieses Turbinenrad ist beispielsweise über eine Welle mit einem Verdichterrad gekoppelt, das eine Verdichtung von zugeführter Frischluft in dem Brennraum sicherstellt. Eine solche Vorverdichtung bzw. "Aufladung" führt zu einer erhöhten Motorleistung bzw. erhöhtem Drehmoment gegenüber herkömmlichen Verbrennungskraftmaschinen. Allerdings besteht bei derartig aufgeladenen Verbrennungskraftmaschinen das Problem des so genannten "Turbolochs", das insbesondere beim Anfahren und Beschleunigen aus niedrigen Drehzahlen eines Fahrzeugs, also wenn die Verbrennungskraftmaschine rasch in Bereiche höherer Leistung beschleunigt werden soll, auftritt. Dies rührt daher, dass der erhöhte Luftmengenbedarf auf der Luftzuführseite nur mit einer Verzögerung bereitgestellt werden kann (unter anderem bedingt durch die Trägheit des Systems Turbinenrad-Verdichterrad).

Die US 5 904 471 offenbart eine Verdichteranordnung zur Verdichtung von Frischluft für Verbrennungsmotoren enthaltend ein Verdichterrad sowie einen Elektromotor mit mindestens einem einen Rotormagneten enthaltenden Rotor und mindestens einem Stator sowie einem Rotorspalt zwischen Rotor und Stator. Das Verdichterrad ist an einer Welle befestigt und mit dieser verbindbar, so dass ein Verdrehen des Verdichterrades gegenüber der Welle nicht möglich ist.

Die Druckschrift EP 0 642 210 A1 offenbart einen schnell laufenden Elektromotor mit relativ großem Luftspalt.

Es ist daher die Aufgabe der vorliegenden Erfindung, einen Turbolader zur Verfügung zu stellen, der mit geringstmöglicher Verzögerung die genau richtige Menge Frischluft zuführt, und der darüber hinaus im Aufbau einfach und möglichst wenig störanfällig ist.

Darüber hinaus soll die Anordnung auch großindustriell kostengünstig herstellbar und auch leicht zu reparieren sein.

Diese Aufgabe wird durch die Gegenstände der unabhängigen Patentansprüche 1 bzw.14 gelöst.

Die Erfindung betrifft Verdichteranordnungen, bei denen ein gegenüber dem Stand der Technik großer Spalt zwischen Rotor und Stator gegeben ist, wobei durch diesen Spalt vorzugsweise zu verdichtende Luft einer Verdichteranordnung zugeführt wird. Dies kann eine Verdichteranordnung zur Verdichtung von Frischluft für Verbrennungsmotoren, enthaltend ein Verdichterrad sowie einen Elektromotor mit mindestens einem einen Elektromagneten enthaltenden Rotor und mindestens einem Stator sowie einem Rotorspalt zwischen Rotor und Stator sein, wobei der Rotorspalt so ausgestaltet ist, dass bei rotierendem Verdichterrad mindestens 50%, vorzugsweise mindestens 90%, besonders vorzugsweise 100% des zu verdichtenden Luftmassenstroms durch den Rotorspalt geführt werden. Maßgeblich ist also, dass der Hauptluftmassenstrom durch den Rotorspalt geführt wird und andere Luftströme (etwa Rezirkulationsströme oder Kühlströme) im Verhältnis hierzu relativ klein gehalten werden (siehe Patentanspruch 1). Außerdem soll auf die unabhängigen Ansprüche nach Patentanspruch 18 und 19 eingegangen werden. Im Kontext dieser Anmeldung wird der Begriff "Rotorspalt" gleich bedeutend zu "Medienspalt" und "Luftspalt" verwendet.

Patentanspruch 14 betrifft hierbei eine Verdichteranordnung zur Verdichtung von Frischluft für Verbrennungskraftmotoren, enthaltend ein Verdichterrad sowie einen Elektromotor, mit Rotor und Stator, wobei der Rotor mindestens einen Rotormagneten aufweist und der kleinste Innendurchmesser des Stators 1,2- bis 10-mal, vorzugsweise 1,5- bis 8-mal, besonders vorzugsweise 2- bis 4-mal, ganz besonders vorzugsweise 2,3- bis 4-mal so groß ist wie der größte Außendurchmesser des Rotors. Die Drehzahl des Elektromotors zum Verdichten der Luft beträgt vorzugsweise mehr als 15.000 U/min.

Begriffe "Querschnittsfläche der Einlassöffnung" bzw. Querschnittsfläche des Rotormagneten" werden weiter hinten in der Beschreibungseinleitung nochmals genauestens definiert.

Den zwei erfindungsgemäßen Varianten bzw. unabhängigen Ansprüchen ist also das Merkmal gemeinsam, dass zwischen Stator und Rotor ein relativ großer Spalt gegeben ist, durch den beispielsweise zu verdichtende Luft als genutztes Medium geführt werden kann.

Kennzeichnend für diese beiden Varianten ist hierbei, dass jeweils das Verdichterrad an einer Welle befestigt ist oder das Verdichterrad diese Welle enthält und mindestens ein Rotormagnet oder ein Träger zum Halten des Rotormagneten als gesondertes Bauteil an diese Welle montierbar und mit dieser verschraubbar, aufpressbar, versplintbar, verklebbar, verlötbar, verschweißbar, umspritzbar, auf diese Welle aufschrumpfbar, in die Welle einschrumpfbar oder durch Formschluss gegen Verdrehen an dieser Welle sicherbar ist. Dies bedeutet, dass der Rotormagnet mit Hilfe von lösbaren und unlösbaren Verbindungselementen mit der Welle verbindbar ist.

Diese Befestigung ist alternativ dazu zu sehen, dass der Rotormagnet des Rotors partiell oder auch komplett in das Verdichterrad integriert ist. Bei diesen Varianten geht es also eher darum, hier den Rotormagneten bzw. dessen Träger als gesondertes Element anzubringen, was unter Umständen fertigungstechnisch vorteilhaft sein kann.

Das Verdichterrad ist üblicherweise auf einer Welle befestigt, beispielsweise durch Aufschrumpfen und zusätzliches Verschrauben bzw. zumindest Aufschrumpfen und zusätzliche axiale Fixierung. Wichtig ist, dass aufgrund der Kerbwirkung von Gewinden bzw. zusätzlichen Einschlüssen, insbesondere bei Aluminiumdruckguss, keine unnötigen Schwächungen in das Verdichterrad eingebracht werden. Solche Schwächungen sollen allerdings keinesfalls hier ausgeschlossen werden, wichtig ist (dies gilt auch für Rotormagnet oder dessen Träger), möglichst rotationssymmetrische Anordnungen zu finden, so dass eine zu hohe Belastung der Welle und deren Lager durch Unrundheit ausgeschlossen werden kann.

Das Verdichterrad kann aber auch selbst einen Fortsatz aufweisen, der eine Welle darstellt und beispielsweise um eine andere Welle (an der beispielsweise ein Turbinenrad auch befestigt ist) herum angeordnet ist oder in Verlängerung einer solchen Welle. Ein Rotormagnet kann auf eine Welle (sei es die Welle, auf der das Verdichterrad selber sitzt oder eine entsprechende Welle des Verdichterrades) aufgesetzt sein. Hier bieten sich beispielsweise hohlzylindrische Formen an, auf die der Rotormagnet radial formschlüssig aufgebracht wird, so dass bereits durch den Formschluss ein Verdrehen verhindert werden kann. Zu beachten ist allerdings, dass übliche Magnetwerkstoffe schon aufgrund ihrer Sprödigkeit bei sehr hohen Drehzahlen instabil werden können bzw. erst recht instabil werden können durch zusätzliche mechanische Beanspruchung. Von daher bietet sich hier auch ein gesonderter Träger, vorzugsweise aus Metall oder Kunststoff, an, der den Rotormagneten hält. Es ist nun erfindungsgemäß möglich, den Rotormagneten bzw. den Träger zum Halten des Rotormagneten als gesondertes Bauteil auf eine der oben genannten Wellen zu montieren und an dieser Welle zu verschrauben, zu versplinten, zu verkleben, auf diese Welle aufzuschrumpfen oder durch Formschluss gegen Verdrehen an dieser Welle zu sichern.

Dies kann sowohl radial außerhalb als auch radial innerhalb erfolgen bzw. auch in Verlängerung der Wellenachse.

Mit den oben genannten Möglichkeiten kann eine erfindungsgemäße Verdichteranordnung, welche einen großen Rotorspalte aufweist, großindustriell leicht hergestellt werden, insbesondere die Wartung und Reparatur wird nochmals erleichtert.

Im Folgenden werden Weiterbildungen der Erfindung bzw. Details bzw. nähere Definitionen nochmals erläutert.

Eine Weiterbildung sieht vor, dass die Welle, auf der das Verdichterrad befestigt ist, außerdem ein Turbinenrad trägt. Dies ist bei klassischen Turboladern die häufigstes Anordnung, üblicherweise ist die Lagerung der Welle zwischen Verdichterrad und Turbinenrad angeordnet.

Eine weitere Weiterbildung sieht vor, dass die Welle ein Gewinde aufweist zum Verschrauben des Verdichterrades, des Rotormagneten und/oder des Trägers des Rotormagneten. Hierdurch wird neben einer radialen auch eine axiale Fixierung erreicht, zusätzlich können Sicherungen in Form von Sicherungsringen oder ähnlichem vorgesehen sein.

Eine weitere Weiterbildung sieht vor, dass die Welle ein Gewinde aufweist zum Anbringen einer Gewindemutter zum Kontern und/oder Sichern des Verdichterrades, des Rotormagneten. Mit der Gewindemutter wird erreicht, dass einerseits ein fester axialer Halt besteht und außerdem die Anordnung, beispielsweise nach starken thermischen Belastungen, nachgestellt werden kann. Zwischen den einzelnen Bauteilen, die axial auf der Welle hintereinander angeordnet sind, können auch Distanzelemente bzw. Distanzscheiben angeordnet sein.

Zur zusätzlichen radialen Sicherung kann der Formschluss des Verdichterrades, des Rotormagneten und/oder des Trägers des Rotormagneten einerseits und der Welle andererseits durch eine Innenverzahnung, die zu einer Außenverzahnung der Welle komplementär ist, oder auch durch eine Außenverzahnung, die zu einer entsprechenden Innenverzahnung der Welle komplementär ist, erfolgen. Alternativ kann der Formschluss des Verdichterrades, des Rotormagneten und/oder des Trägers des Rotormagneten einerseits und der Welle andererseits durch eine Nutfederverbindung hergestellt sein. Das Verdichterrad einerseits und der Rotormagnet bzw. der Träger des Rotormagneten andererseits können außerdem radial zueinander verschraubt sein, beispielsweise indem ein Träger des Rotormagneten auf das Verdichterrad aufgeschraubt wird bzw. auf einer als Fortsatz herauszeigende Welle des Verdichterrades aufgeschraubt wird. Zusätzlich ist auch eine axiale Fixierung möglich, beispielsweise das durch Schrauben, die zu einer Welle parallel laufen, der Träger des Rotormagneten oder auch der Rotormagnet selbst an das Verdichterrad angeschraubt wird.

Alternativ kann auch durch Splinte eine radiale bzw. axiale Sicherung von Rotormagnet oder Träger des Rotormagneten erfolgen, hierzu weist die Welle, vorzugsweise rotationssymmetrisch angeordnete, Schwächungen auf, in die weitere Bauteile zur Sicherung eingesteckt bzw. eingeschraubt werden.

Der Träger des Rotormagneten, ebenso wie das Verdichterrad, können aus Kunststoff oder Metall sein. Beide Materialien haben den Vorteil, dass diese großindustriell leicht im Spritzgussverfahren herstellbar sind. Für den Träger des Rotormagneten bietet sich Kunststoff insbesondere an, da der Träger vorzugsweise nicht so weit radial herausragt wie das Verdichterrad und von daher selbst bei sehr hohen Drehzahlen moderne Kunststoffe ausreichen können, um die Belastung der im Träger gehaltenen Rotormagnete auszuhalten.

Der Träger kann Ringkammern bzw. Teilringkammern aufweisen, in die ein hohlzylindrischer bzw. ringförmiger Magnet eingelegt werden kann bzw. Ringabschnitte desselben. Eine vorteilhafte Variante sieht vor, dass mehrere Hohlräume zum Einsetzen von Rotormagneten vorgesehen sind, wobei diese Hohlräume vorzugsweise radial um die Welle herum regelmäßig angeordnet sind, um einen runden Lauf der Welle zu ermöglichen.

Hierbei kann der Träger axial offene Kammern aufweisen zur Aufnahme der Rotormagneten (diese können einseitig oder beidseitig offen sein), allerdings können hier auch durch Deckel geschlossene Kammern vorgesehen sein.

Die Welle selbst kann gestuft sein, um einen Rotormagneten bzw. den Träger des Rotormagneten bzw. das Verdichterrad zumindest einseitig axial zu fixieren. Eine weitere vorteilhafte Weiterbildung sieht vor, dass der Träger außerdem Flügel bzw. Schrauben aufweist, die beispielsweise eine Vorverdichtung des Gasstroms, der von dem Verdichterrad verdichtet werden soll, vornimmt. Diese Flügel bzw. Schrauben können vorzugsweise radial außerhalb am Träger befestigt sein.

Die Erfindung betrifft somit außerdem einen Turbolader mit einer Verdichteranordnung zur Verdichtung von Frischluft für Verbrennungskraftmotoren, enthaltend ein Verdichterrad sowie ein Elektromotor mit Rotor und Stator, wobei ein Rotormagnet des Rotors so ausgebildet ist, dass er partiell oder auch komplett in das Verdichterrad integriert ist (also dass Rotormagnet bzw. Rotor einerseits und Verdichterrad andererseits miteinander verbunden sind) und der kleinste Innendurchmesser des Stators 1,5 bis 8 mal so ist wie der größte Außendurchmesser des Rotors. Die angegebenen Längen beziehen sich hierbei jeweils auf die größten Ausdehnungen bzw. kleinsten Ausdehnungen der beteiligten Elemente, allerdings lediglich im Bereich der elektrisch bzw. magnetisch wirksamen Elemente, d.h. beispielsweise nur über die Länge des Rotormagneten).

Im Kontext der vorliegenden Anmeldung werden unter "Turboladern" sämtliche Mittel verstanden, die einer Verbrennungskraftmaschine vorkomprimierte Verbrennungsluft zuführen können, wodurch eine größere Luftmasse in den Brennraum gelangt. (Eine klassische Verdichterrad-Turbinenrad-Kopplung ist also nicht erforderlich).

Die Erfindung betrifft somit außerdem einen Turbolader, enthaltend mindestens ein Verdichterrad, wobei das Verdichterrad über mindestens einen Elektromotor antreibbar ist und der Elektromotor einen Rotor, einen Stator sowie einen Rotorspalt zwischen Rotor und Stator aufweist und der Rotorspalt so ausgestaltet ist, dass bei rotierendem Verdichterrad mindestens 50%, vorzugsweise mindestens 90% des zu verdichtenden Luftmassenstroms durch den Rotorspalt geführt werden.

Die genannten Prozentzahlen geben jeweils Mindestbereiche an. Die Prozentzahlen gelten hierbei prinzipiell für den gesamten Drehzahlbereich des Turboladers bzw. eines daran angeschlossenen Verbrennungskraftmotors.

In einer Weiterbildung soll der gesamte Luftstrom, der dem jeweiligen Verdichterrad zugeführt wird, durch diesen Rotorspalt geführt werden.

Die zahlenwertmäßige Abgrenzung hat unter anderem auch den Sinn, dass unerwünschte bzw. "zufällige" Leckströmungen, wie sie im Stand der Technik vorkommen könnten, entsprechend ausgeschlossen werden. Eine "Rezirkulationsströmung" zwischen Rotor und Stator bei Gegenständen nach dem Stand der Technik, bei denen der Rotor auf der Außenseite des Verdichterrades, sehr nahe zu dem Stator, angebracht ist, soll allerdings nicht als "zu verdichtender Luftmassenstrom" gesehen werden, da eine solche "Rezirkulationsluft" das Verdichterrad streng genommen bereits passiert hat.

Vorteilhaft ist eine "integrale" Bauform, bei der ein großer Teil des zu verdichtenden Luftmassenstroms bzw. sogar der gesamte zu verdichtende Luftmassenstrom dem mindestens einen Verdichterrad durch den Rotorspalt zugeführt wird.

Im Gegensatz zur Anbringung von Rotoren auf den radialen Außenseiten des Verdichterrades ist es vorteilhaft, den Rotor bzw. seine magnetisch wirksamen Teile möglichst nah an der Drehachse des Verdichterrades anzuordnen. Dies ist zum einen bei schnell laufenden Turboladern aus mechanischer Sicht sehr günstig, da hier durch hohe bzw. sich schnell ändernde Fliehkräfte sonst unter Umständen mechanische Beschädigungen auftreten könnten. Auch vorteilhaft ist, dass die Drehträgheitsmomente auf diese Weise relativ niedrig gehalten werden können, da radial außen liegende Magnete üblicherweise ein hohes spezifisches Gewicht und somit ein sehr hohes Drehträgheitsmoment aufweisen. Dadurch kann das instationäre Verhalten des Verdichters erheblich verbessert werden. Hinzu kommt bei am Verdichterrad außen liegenden Magneten, dass diese auch thermisch stärker beansprucht werden, da an diesen Außenseiten starke Erwärmungen durch die Kompressionsarbeit entstehen können, die sich wiederum nachteilig auf die Lebensdauer der Magnete des Rotors auswirken können.

Aus der Literatur sind Turbolader bekannt, die zur Stromerzeugung verwendet werden. Diese Turbloader sind als kleine Gasturbinen ausgebildet und verfügen ebenfalls über eine Turbine sowie einen starr gekoppelten Verdichter. Auf der Läuferwelle der Turbine ist ein konventioneller Generator zur Stromerzeugung angeflanscht. Da der Generator innerhalb des Ansaugtraktes angeordnet ist, stellt er eine hohen Strömungswiderstand dar, der den wirkungsgrad senkt und gleichzeitig treten sehr hohe Beanspruchungen an den Lagerkomponenten auf.

Eine Weiterbildung des Turboladers sieht vor, diesen z.B. als Mikroturbine für die Kraft-Wärme- oder Kraft-Kälte-Kopplung zu verwenden. Dabei strömt die Verbrennungsluft zwischen Rotor und Stator des Elektromotors/Generators in den Verdichter und wird dort komprimiert und somit vorgewärmt auf ca. 200°C. In einem Wärmetauscher wird die vorgewärmte, komprimierte Luft durch das heiße Abgas auf ein höheres Temperaturniveau gebracht. In einer nachgeschalteten Brennkammer wird die komprimiert, warme Luft gemeinsam mit einem Brennstoff z.B. regenerativem Gas verbrannt. Die so entstandenen heißen Gase werden in der Turbine entspannt und treiben das Turbinenrad und somit den Verdichter sowie den Generator an. Die Wärmeenergie des Abgases wird teilweise in dem Wärmetauscher direkt wieder an die komprimierte Verbrennungsluft abgegeben. Darüber hinaus kann dieser erfindungsgemäße Turbolader mit einem zweiten Wärmetauscher gekoppelt werden um die gesamte Restwärme zur Warmwassererzeugung zu nutzen oder sie einem Heizkreis z.B. für die Gebäudetemperierung zuzuführen. Zum Starten des Prozesses kann der Generator als Elektromotor verwendet werden. Somit können mit dem erfindungsgemäßen Turbolader beispielsweise kostengünstige kleine Blockheizkraftwerke erzeugt werden, deren wesentlichen Komponenten aus Großserienbauteilen bestehen.

Eine Weiterbildung sieht vor, dass die Masse des Rotormagneten zwischen *5g und 1000g* beträgt, vorzugsweise zwischen 10 und 100g für Automobilturbolader. Das Massenträgheitsmoment der magnetisch (aktiv) wirksamen Masse des Elektromotors bezüglich der Drehachse des Rotors beträgt hierbei zwischen 0,1 kgmm² und 10kgmm², vorzugsweise zwischen 0,3 kgmm² und 1,0 kgmm² für Automobilanwendungen.

Dadurch, dass relativ große Luftspalte bei dem erfindungsgemäßen Rotorspalt möglich sind, sind also sowohl Massen als auch Massenträgheitsmomente der elektrisch bzw. magnetisch wirksamen Motorbestandteile klein, es bildet sich trotzdem ein sehr homogenes Feld.

Eine Weiterbildung sieht vor, dass das Verdichterrad auf einer Achse gelagert ist und Schaufeln enthält, wobei die Vorderkanten der Schaufeln (also der Abschnitt des Verdichterrades, auf den die Luft zuerst trifft) in Lufteinlassströmungsrichtung stromabwärts bezüglich eines magnetisch wirksamen Vorderabschnitts des Rotors und/oder eines magnetisch wirksamen Vorderabschnitts des Stators liegen.

Dies heißt also, dass die aktiven Komponenten des Elektromotors (Rotor bzw. Stator) axial noch stärker zum Lufteinlass hin angeordnet sind und das eigentliche Verdichterrad stromabwärts angeordnet ist. Hierdurch wird es unter anderem auch möglich, die gesamte dem Verdichterrad zuzuführende Einlassluft durch den Rotorspalt zu führen.

Es ist jedoch auch konstruktiv möglich den Rotor in das Verdichterrad oder gar auf der Turbinenrad zugewandten Seite des Verdichterrades zu applizieren um das Biegemoment auf der Verdichterwelle zu verringern, dennoch wird der zu verdichtenden Luftmassenstrom primär durch den Rotorspalt durchgeführt.

Ein Mischverbau mehrerer verschiedener Rotormagnete an unterschiedlichen Stellen des Verdichterrades (vor, innerhalb und/ oder hinter) ermöglicht eine Optimierung des notwendigen Bauraums bei gleichzeitiger Optimierung des Motordrehmoments und Verringerung der Biegebeanspruchung der Läuferwelle. Dabei muss die Form des Rotors/Stators nicht zwangsläufig kreiszylindrisch sein, sondern kann an die Form des Verdichterrades angepasst werden.

Beim Betrieb der Verdichteranordnung ist es wichtig, dass die genannten anteiligen Luftmassenströme von mindestens 50% bzw. mindestens 90% bzw. sogar 100% dem üblichen Betrieb des Turboladers erreicht werden, beispielsweise in einem Betriebszustand, bei dem die Drehzahl des Verdichterrades zwischen 5000 und 300000 U/min, vorzugsweise zwischen 40000 und 200000 U/min beträgt oder auch die Drehzahl eines angeschlossenen Verbrennungsmotors zwischen 50 und 200000 U/min, vorzugsweise zwischen 100 und 15000 U/min bei Hubkolbenmotoren beträgt.

Es sei nochmals betont, dass ein "Turbolader" im Sinne der vorliegenden Beschreibung nicht zwangsweise ein von einem Abgasstrom angetriebenes Turbinenrad beinhalten muss. Wichtig ist lediglich, dass mindestens ein (wie auch immer angetriebenes Verdichterrad) zur Zuführung von vorkomprimierter Verbrennungsluft zu einem Verbrennungsmotor im "Turbolader" enthalten ist.

Der hier beschriebene Turbolader enthält in einer Weiterbildung ein Turbinenrad sowie ein damit verbundenes Verdichterrad, wobei auf der dem Turbinenrad abgewandten Seite des Verdichterrades ein Elektromotor vorgesehen ist und ein mit dem Verdichterrad drehfest verbundener Rotor des Elektromotors frei auskragend ausgeführt ist.

Der Elektromotor dient dazu, bei einer (z.B. von einer Steuerelektronik festgestellten) höheren Frischluftanforderung eine zusätzliche Beschleunigung des Verdichterrades durch den Elektromotor bereitzustellen. Hierzu sind Elektromotoren günstig, da diese ohne merkliche Anfahrverzögerung mit hohem Drehmoment beschleunigt werden können.

Außerdem ist vorteilhaft, dass der Elektromotor im vorliegenden Fall nicht zwischen dem Turbinenrad und dem Verdichterrad angeordnet ist. Eine solche Anordnung kann zu thermischen Problemen führen und stellt auch eine starke konstruktive Abwandlung von herkömmlichen (rein mechanischen) Turboladern dar. Neben dem erhöhten konstruktiven Aufwand ist der Reparaturaufwand bei solchen Aufbauten erheblich. Vorteilhaft (aber auch im Rahmen der Erfindung nicht zwingend) ist, dass im vorliegenden Fall in axialer Richtung gesehen eine Abfolge "Turbinenrad, Welle (Lagerung), Verdichterrad, Elektromotor" gegeben ist. Der Elektromotor ist dann im Wesentlichen nur der Umgebungstemperatur ausgesetzt, so dass es hier nicht zu einer thermischen Zersetzung der Statorwicklung etc. kommen kann.

Ein Vorteil liegt in dem frei auskragenden Ende jenseits des Verdichterrades. Hier ist der Rotor des Elektromotors angebracht. Es ist möglich, aber nicht unbedingt notwendig, hier eine weitere Lagerstelle anzubringen, um den Rotor somit beidseitig zu lagern. Eine solche Lagerstelle kann zum einen die elektrischen Eigenschaften des Elektromotors unter Umständen stören und u.U. eine statische Überbestimmung darstellen. Des Weiteren wird die Reibungsarbeit im System erhöht. Außerdem ist auch die Frischluftzuführung durch ein solches Lager u.U. behindert, da entsprechende Streben die Einlassluftöffnung zum Verdichterrad hin verkleinern. Eine solche Lagerstelle, d.h. eine axial beidseitige Lagerung des Verdichterrades, ist allerdings auch gut möglich.

Außerdem ist mit dem "auskragenden" Rotor der konstruktive Unterschied zu rein mechanischen Turboladern denkbar gering, so dass auf diese Weise sehr kostengünstig, modular und leicht reparierbar ein Elektromotor an herkömmliche Turbolader ergänzt werden kann.

Das hier beschriebene Antriebssystem enthält neben dem Turbolader einen Verbrennungskraftmotor. Unter "Verbrennungskraftmotor" soll im Kontext der vorliegenden Beschreibung jeglicher Motor verstanden werden, der sowohl Frischluft/Frischgas als auch Abgas benötigt bzw. produziert, so dass ein entsprechender Turbolader hier Anwendung finden könnte. Darüber hinaus enthält das Antriebssystem auch einen Speicher für elektrische Energie. Hier ist vorzugsweise der Elektromotor des Turboladers mit dem Speicher für elektrische Energie verbunden zur Entnahme elektrischer Energie in einem Motorbetrieb des Turboladers und zur Einspeisung elektrischer Energie in einem Generatorbetrieb des Turboladers.

In vielen Betriebszuständen eines Turboladers (z.B. Volllast, Schubbetrieb etc) wird bis zu 30% das Abgas ungenutzt abgeblasen. Mit der beschriebenen Ausführungsform des Turboladers kann die Energie dieses überschüssigen Abgases zusätzlich energetisch genutzt werden, indem der Elektromotor als Generator verwendet wird. Auf diese Weise kann zum einen überschüssige "thermisch/kinetische Energie" als elektrische Energie wieder gewonnen werden, hierdurch wird die Energiebilanz des Antriebssystems erheblich verbessert. Idealerweise kann der Turbolader sogar so ausgelegt sein, dass der im Kraftfahrzeug befindliche Verbrennungsmotor keine zusätzliche Lichtmaschine mehr benötigt.

Besonders vorteilhaft bei diesem Antriebssystem ist auch, wenn der Elektromotor des Turboladers bzw. der mit ihm verbundene elektrische Speicher zusätzlich mit einem elektromotorischen Antrieb eines Kraftfahrzeuges verbindbar ist. Dieser elektromotorische Antrieb kann beispielsweise ein Nabenelektromotor (oder ein anderer im Antriebsstrang vorgesehener Elektromotor) sein, der an einem Antriebsrad des Kraftfahrzeugs befestigt ist. In modernen, so genannten "Hybridfahrzeugen" wird auf diese Weise sowohl eine zusätzliche Bereitstellung von Drehmoment bzw. Motorleistung beim Beschleunigen erzielt, da neben dem Verbrennungskraftmotor auch die elektrischen Nabenmotoren für die Beschleunigung zuständig sind. Bei Bremsvorgängen kann durch das Umschalten der elektrischen Nabenmotoren in den Generatorbetrieb eine Bremswirkung und somit eine Rückgewinnung von kinetischer in elektrische Energie erreicht werden, die in einem entsprechenden Speicher zwischengespeichert wird. Ist nun auch der Elektromotor des Turboladers mit eben diesem Speicher verbunden, kann somit zentral die gesamte elektrische Energie "verwaltet" werden, um diese jederzeit nutzbringend abrufbar zu machen.

Daneben ist es selbstverständlich aber auch möglich, dass das Turboladersystem und die elektrischen Nabenmotoren (bzw. andere Motore im Antriebsstrang) voneinander unabhängige elektrische Speicher haben.

Dies kann vorteilhaft sein, wenn das Turboladersystem (bzw. Verdichtersystem, also ohne ein Turbinenrad) eine elektrische Spannung aufweisen, die von dem des Bordsystem des Kraftfahrzeugs bzw. eines elektrischen Antriebssystems des Fahrzeugs abweichen. Dadurch ist es möglich, dass dieses autarke System beispielsweise im Schubbetrieb des Kraftfahrzeugs automatisch geladen wird und beim Beschleunigen aus einem entsprechenden autarken Speicher mit Antriebsenergie wieder versorgt wird. Ein Hochtranformieren bzw. Heruntertransformieren zwischen dem elektrischen System des Verdichtersystems und dem Antriebssystem bzw. dem Bordnetz ist von daher nicht mehr notwendig, das System kann zur zusätzlichen Absicherung entsprechend elektrisch gekapselt sein.

Der Turbolader eignet sich darüber hinaus auch zum Einsatz in modulierbaren Stromerzeugungsanlagen, die mit Brennstoffen wie Erdgas, Flüssiggas, Heizöl aber auch regenerativen Gasen wie Bio-, Klär- und Deponiegas oder Festbrennstoffen wie Hackschnitzel, Holzstückgut, Stroh etc. betrieben werden können. Durch diese Art der Kraft-Wärme-Kopplung können kostengünstige Anlagen zur Energieerzeugung mit hohem Wirkungsgrad realisiert werden. Der erfindungsgemäße Turbolader kann also auch als Grundmodul einer Mikroturbine für die Kraft-Wärme-Kopplung verwendet werden.

Zur Steuerung der elektrischen Energie, des Lade- und Entladevorgangs bzw. zur Bereitstellung optimalen Drehmoments bei niedrigem Verbrauch ist in dem Antriebssystem vorzugsweise eine Steuerelektronik vorzusehen. Als Regelparameter dienen die Drehzahl von Turbinenrad oder Verdichterrad, Ist-Werte von turbinengehäuseseitigen und verdichtergehäuseseitigen Druckverhältnissen sowie weiteren für den Verbrennungskraftmotor drehmomentrelevanten Kenngrößen.

Eine Weiterbildung sieht vor, dass Turbinenrad und Verdichterrad dauerhaft drehfest miteinander verbunden sind. Dies bedeutet, dass keine Kupplung zwischen Turbinenrad und Verdichterrad gegeben ist, wodurch der mechanische Aufbau und die Störanfälligkeit des Systems erhöht würden. Stattdessen wird angestrebt, durch einen leichten Rotor, ein leichtes Verdichterrad, eine leichte Welle und ein entsprechend massearmes Turbinenrad die bewegten Drehmassen zu begrenzen.

Das Gehäuse des Turboladers ist vorzugsweise modular aufgebaut, d.h., dass neben einem Turbinengehäuse für das Turbinenrad ein Verdichtergehäuse für das Verdichterrad gegeben ist. Das Turbinengehäuse ist vorzugsweise mit einem Abgaskrümmer verbunden, der von den einzelnen Zylindern des Verbrennungskraftmotors Abgas zum Turbinenrad hinführt. Aufgrund der thermischen Belastung des Turbinengehäuses sind die konstruktiven Anforderungen etwas anders als an das Verdichtergehäuse, das das Verdichterrad umgibt. Die eigentliche Lagerung von Turbinenrad und Verdichterrad findet vorzugsweise ausschließlich zwischen Turbinenrad und Verdichterrad statt. D.h., dass auf der dem Turbinenrad abgewandten Seite des Verdichterrades keine zusätzliche Lagerung gegeben ist, da hier ja der Rotor des Elektromotors frei auskragt. Vorzugsweise ist ein Lagergehäuse zwischen Turbinengehäuse und Verdichtergehäuse vorgesehen, das zur Aufnahme von Lagerelementen für das Turbinenrad und das Verdichterrad dient.

Vorzugsweise enthält der Elektromotor einen Stator, der im Wesentlichen eine zylindrische Form aufweist und der den Rotor konzentrisch umgibt. Hierbei ist vorteilhaft, dass der Stator als Teil der Innenwand des Verdichtergehäuses ausgeführt werden kann. Der Stator kann beispielsweise auch als Einsatz in eine korrespondierende Öffnung des Verdichtergehäuses einsetzbar sein. Vorteilhaft an diesen Ausführungsformen ist, dass nur eine geringstmögliche konstruktive Änderung herkömmlicher mechanischer Turbolader nötig ist, so dass hierdurch insbesondere in der Großserie große Kosten- und Wettbewerbsvorteile realisierbar sind.

Der Rotor des Elektromotors weist vorzugsweise einen Rotormagneten auf, der von einer Armierung umgeben ist. Hierdurch wird der Rotormagnet mechanisch geschützt. Es kann außerdem auf diese Weise auf die Art des Magnetfeldes Einfluss genommen werden. Der Rotormagnet kann so ausgebildet sein, dass er partiell oder auch komplett in das Verdichterrad integriert ist. Besteht das Verdichterrad aus faserverstärktem oder unverstärktem Kunststoff, so kann der Rotormagnet bei der Produktion direkt mit der Kunststoffmasse umspritzt werden, wodurch eine kostengünstige Großserienfertigung ermöglicht wird.

Vorzugsweise ist die Armierung des Rotors "hohlzylinderförmig" ausgeführt.

Fertigungstechnisch ist es vorteilhaft, dass der Rotormagnet innen bereichsweise hohl ist zum Aufstecken auf eine gemeinsame Welle mit dem Verdichterrad. Auf diese Weise ist eine kostengünstige Fertigung möglich.

Das Verdichterrad besteht vorzugsweise aus einem nicht magnetisierbaren Werkstoff, der das Elektromagnetfeld nicht negativ beeinträchtigt. Vorzugsweise kann das Verdichterrad auch aus einem nichtmetallischen Material, vorzugsweise einem verstärkten oder unverstärkten Kunststoff sein.

Eine Weiterbildung sieht vor, dass der Rotorspalt zwischen Rotor und Stator eine (und zwar die einzige beabsichtigte) Einlassluftöffnung für das Verdichterrad darstellt. Dies bedeutet wiederum, dass der Elektromotor den Luftzustrom kaum behindert und dass keine zusätzlichen Luftzuführöffnungen vorgesehen werden müssen, welche den Strömungswiderstand unnötig erhöhen würden. Es ist daher sogar möglich, dass die Einlassluftöffnung frei von Streben zwischen Rotor und Stator ist. Aufgrund des Wegfalls des "Gegenlagers" ist hier eine solche Verstrebung nicht notwendig. Gleichwohl kann ein solches "Gegenlager", sowohl bei "klassischen" Turboladern mit Turbinen, als auch bei Turboladern, die lediglich als Verdichterstufe ausgelegt sind, zur Anwendung kommen (beispielsweise bei besonders hohen Drehzahlen, kritischen Eigenfrequenzen etc.).

Die Einlassöffnung kann, je nach Dimensionierung von Rotor bzw. Stator mit einer großen Querschnittsfläche versehen sein. Vorzugsweise ist der kleinste Innendurchmesser des Stators 1,2- bis 10-mal, vorzugsweise 1,5- bis 8mal, besonders vorzugsweise 2-bis 4mal so groß ist wie der größte Außendurchmesser des Rotors. Die angegebenen Längen beziehen sich hierbei jeweils auf die größten Ausdehnungen bzw. kleinsten Ausdehnungen der beteiligten Elemente, allerdings lediglich im Bereich der elektrisch bzw. magnetisch wirksamen Elemente (also nur über die Länge des beispielsweise Rotormagneten, eine nachfolgende Verdickung (beispielsweise im Bereich des Verdichterrades) ist hier nicht maßgeblich. Es ist ausreichend, wenn die Werte in einem einzigen Querschnitt (einer Querschnittfläche) erfüllt sind.

Eine Weiterbildung sieht vor, dass das Verdichterrad eine Förderstruktur in Form von Schnecken, Schaufeln oder Flügeln enthält, wobei die Vorderkanten der Förderstruktur in Lufteinlassströmungsrichtung stromabwärts oder stromaufwärts bezüglich einer magnetisch wirksamen Vorderkante des Rotormagneten oder einer magnetisch wirksamen Förderkante des Stators liegen. Mit "magnetisch wirksamen Vorderkanten" sind in diesem Zusammenhang die tatsächlichen elektrischen bzw. magnetischen Komponenten gemeint, allerdings ohne isolierende Umfassungen etc. Hiermit sind Freiheiten gegeben, den Stator bzw. den Rotor bezüglich des Verdichterrades praktisch beliebig anzuordnen, je nach Anwendungsfall. Beispielsweise ist die Anordnung der Vorderkante des Rotormagneten stromaufwärts zur Lufteinlassströmungsrichtung sinnvoll, wenn beispielsweise ein Verdichterrad aus einem metallischen Material verwendet wird. Dadurch, dass der Rotormagnet aus dem Verdichterrad herausragt, sind die elektrischen bzw. magnetischen Eigenschaften des entsprechenden Motors besonders günstig. Ist allerdings eine Minimierung von Bauraum gefragt, kann der Rotormagnet auch erst innerhalb einer Förderstruktur des Verdichterrades beginnen. Dies bietet sich beispielsweise an, wenn die Förderstruktur aus einem Kunststoffmaterial besteht. Die Vorderkante des Stators kann ebenso stromabwärts oder stromaufwärts bezüglich einer Vorderkante der Förderstruktur angeordnet werden. Hier stehen ebenfalls Bauraumerwägungen sowie Materialüberlegungen im Vordergrund.

Eine weitere (alternativ bzw. kumulativ zu dem vorher Gesagten) Bauform sieht vor, dass das Verdichterrad eine Förderstruktur in Form von Schaufeln, Schnecken oder Flügeln enthält, wobei die Hinterkanten der Förderstruktur in Lufteinströmungsrichtung stromabwärts oder stromaufwärts bezüglich einer Hinterkante des Rotormagneten und/oder einer Hinterkante des Stators liegen. Je nach dielektrischen bzw. magnetischen Eigenschaften der umliegenden Materialien, Abmessungen des Rotormagneten bzw. des Stators bzw. des Verdichterrades/der Förderstruktur können also die "antreibenden" Elemente auch teilweise stromabwärts der Förderstruktur angeordnet sein. Besonders große bzw. leistungsfähige Statoranordnungen bzw. Rotormagneten können hierbei auch so lang ausgeführt werden, dass sie die Förderstruktur bzw. das Verdichterrad beidseitig axial (also stromabwärts und stromaufwärts) überragen.

Eine weitere vorteilhafte Weiterbildung sieht vor, dass Stator und/oder Rotor bezüglich einer Achse des Verdichterrades geneigt sind.

Dies bedeutet also, dass die Außenkontur bzw. die Innenkontur von Rotormagnet bzw. Stator nicht zylindrisch oder hohlzylindrisch sein müssen, sondern dass es hier auch andere Formen geben kann, beispielsweise Kegelstumpf-Formen bzw. Hohlkegelstumpf-Formen. Die erfindungsgemäßen Durchmesser bzw. Flächenverhältnisse müssen bei diesen geneigten Strukturen auch in lediglich einem einzigen Schnitt verwirklicht sein, um die erfindungsgemäße Patentlehre zu verwirklichen.

Eine weitere vorteilhafte Weiterbildung sieht vor, dass der Rotormagnet bezogen auf die Achse des Verdichterrades radial außerhalb der Nabe des Verdichterrades angeordnet ist. Diese Anordnung ist zwar wegen der höheren mechanischen und auch thermischen Belastung des Rotormagneten nicht immer gewünscht, allerdings gibt dies eine noch höhere Flexibilität, beispielsweise die Möglichkeit einer kleinbauenden Nabe (bzw. im Idealfall des Entfallens der Nabe) und einem zusätzlichen Luftstrom im Zentrum des Verdichterrades. Hierzu kann das Verdichterrad auch so ausgeführt sein, dass Luft sowohl radial innerhalb als auch radial außerhalb des Rotormagneten führbar ist. Hier ist es beispielsweise vorstellbar, dass der Rotormagnet im Wesentlichen kreisringförmig ausgeführt ist, allerdings kann dies auch durch eine Anordnung mehrerer Rotormagnetsegmente verwirklicht werden.

Hierbei kann das Verdichterrad so ausgeführt sein, dass mindestens 50%, vorzugsweise mindestens 70%, besonders vorzugsweise mindestens 90% radial außerhalb des Rotormagneten geführt werden.

Eine bereits oben erwähnte Variante sieht vor, dass in zumindest einem Querschnitt das Verhältnis der Querschnittsfläche der Einlassöffnung zur Querschnittsfläche des Rotormagneten (formelmäßig ausgedrückt: V_{QE} = A_{Einlassöffnung}/A_{Rotormagnet}) zwischen 0,5 und 100, vorzugsweise zwischen 0,8 und 50, besonders vorzugsweise zwischen 2 und 20.

Die primäre Arbeitsleistung des Medienspaltmotors ist die Förderung von Medien durch den Spalt zwischen Rotor und Stator, bzw. als Generator der Antrieb durch das Fördermedium im Medienspalt.

Unter "Querschnittsfläche der Einlassöffnung" ist der tatsächliche offene Querschnitt gemeint, in dem Luft bzw. ein Fluid führbar ist. Dies ist also die tatsächliche "Netto-Querschnittsfläche der Einlassöffnung" in diesem Bereich. Beispielsweise ist bei einer kreisrunden Einlassöffnung zunächst einmal die gesamte Kreisfläche anzunehmen, zur Ermittlung der Netto-Querschnittsfläche wird allerdings die entsprechende Querschnittsfläche der Schaufeln bzw. der Nabe (inkl. Armierung, Rotormagnet etc.). Das hier gefundene Maß ist also ein Verhältnis des tatsächlichen Rotormagneten (flächenmäßig) zu dem tatsächlich mit Luft durchströmbaren Querschnitt.

Der Ermittlung von V_{QE} angesetzte Querschnitt verläuft vorzugsweise durch einen Bereich, in dem nicht nur der Rotormagnet vorhanden ist, sondern auch ein magnetisch oder elektrisch wirksamer Abschnitt des Stators.

Eine Weiterbildung sieht vor, dass das Verhältnis der Querschnittsfläche des Stators zur Querschnittsfläche des Rotormagneten (formelmäßig ausgedrückt V_{QS} = A_{Stator}/A_{Rotormagnet}) zwischen 2 und 100 , vorzugsweise zwischen 10 und 50. Hier sind jeweils "Nettoquerschnittsflächen" der elektrisch wirksamen Bestandteile des Stators bzw. Rotormagneten anzugeben. Isolierende Bestandteile bzw. nicht elektrisch/magnetisch wirksame Bestandteile werden hier nicht eingerechnet. So wird bei dem Stator ein Metallgrundkörper (einschließlich beispielsweise Kupferwicklungen) in den Querschnitt mit einberechnet, ein umgebender isolierender Kunststoff allerdings nicht. Entsprechend werden bei dem Rotormagneten auch nur die tatsächlichen magnetisch wirksamen Flächen eingerechnet, auch wenn der Rotor aus verschiedenen Teilen besteht (dann sind die Einzelflächen entsprechend zu addieren, so dass sich eine Gesamtfläche des Rotormagneten ermitteln lässt).

Die oben genannten Querschnitte liegen vorzugsweise senkrecht zur Achse des Verdichterrades.

Eine Weiterbildung sieht vor, dass der Rotor mit dem Verdichterrad verbunden ist und das Verdichterrad axial beidseitig gelagert ist. Hierbei kann das Verdichterrad mit einem Turbinenrad verbunden sein oder nicht, wichtig ist lediglich, dass das Verdichterrad auf beiden Seiten axial gelagert ist, also nicht auskragt.

Eine weitere vorteilhafte Weiterbildung sieht vor, dass der Turbolader lediglich als Verdichtersystem mit mindestens einem Verdichterrad ausgeführt ist und das mindestens eine Verdichterrad ein- oder beidseitig axial gelagert ist. In diesem Falle wäre das Verdichterrad also nicht mit dem Turbinenrad verbunden.

Eine Weiterbildung sieht vor, dass der Turbolader ein Turbinenrad und das Verdichterrad aufweist, wobei auf der dem Turbinenrad zugewandten Seite des Verdichterrades oder zwischen der dem Turbinenrad zugewandten und der dem Turbinenrad abgewandten Seite des Verdichterrades der Elektromotor angeordnet ist.

Eine Weiterbildung sieht vor, dass der kleinste Innendurchmesser des Stators 1,1 bis 1,49 mal, vorzugsweise 1,25 bis 1,49 mal so groß ist wie der größte Außendurchmesser des Rotors.

Eine weitere vorteilhafte Weiterbildung sieht vor, dass der kleinste Innendurchmesser des Stators 8,01 bis 15 mal, vorzugsweise 8,01 bis 12 mal so groß ist wie der größte Außendurchmesser des Rotors.

Die angegebenen Längen beziehen sich hier jeweils auf die größten Ausdehnungen bzw. kleinsten Ausdehnungen der beteiligten Elemente, allerdings lediglich im Bereich der elektrisch bzw. magnetisch wirksamen Elemente (also nur beispielsweise des Rotormagneten, eine nachfolgende Verdickung, beispielsweise im Bereich des Verdichterrades) ist hier nicht maßgeblich.

Zur Verringerung der Stromstärke und zur Steigerung der energetischen Effizienz kann hierbei auch die Sollspannung des Elektromotors mehr als 12 V, beispielsweise 24 oder 48 V betragen.

Möglich ist, dass der Elektromotor vom Motorbetrieb in den Generatorbetrieb umschaltbar ist. Erreicht der Ladedruck (im Turbinengehäuse) einen bestimmten Sollwert, wird unter Verwendung eines rückspeisefähigen Umrichters zusätzliche Energie erzeugt Darüber hinaus kann idealerweise durch die energetische Umwandlung der Bremsenergie auf ein Wastegate/Druckdose zum Abblasen eines überschüssigen Abgasdrucks verzichtet werden.

Die Steuerung des Motor/Generatorbetriebs ermöglicht erstmalig die zeitnahe gezielte Regelung des Aufladevorgangs. Da der Elektromotor vorzugsweise über einen Frequenzumformer geregelt wird, kann die Drehzahl des Verdichters sowie des Turbinenrades und somit der Luftmassenstrom exakt ermittelt werden. Die Steuerung des Aufladevorgangs des Verbrennungsmotors wird vorzugsweise in die zentrale Motorsteuerung integriert. Damit ist es möglich eine kennfeldgesteuerte Aufladung zu realisieren. Somit ist eine exakte Abstimmung und Optimierung der Verbrennungsparameter (Kraftstoffmenge, Luftmenge, Ladedruck, Abgasrückführrate, Zündzeitpunkt etc.) möglich, wodurch eine erhebliche Kraftstoffverbrauchsreduzierung erzielt wird. Dies stellt somit eine aktive Kennfelderweiterung dar, wodurch die Energiebilanz des Verbrennungsmotors erheblich verbessert werden kann. Dieser Regelkreislaufermöglicht die Regelung und Optimierung des gesamten Verbrennungsprozesses innerhalb des Brennraums einer Verbrennungskraftmaschine.

Weitere vorteilhafte Weiterbildungen werden in den übrigen abhängigen Ansprüchen angegeben.

Die vorliegende Erfindung wird nun anhand mehrerer Figuren erläutert. Es zeigen:
- Fig. 1a: eine erste Ausführungsform eines erfindungsgemäßen Turboladers im Teilschnitt;
- Fig. 1b: eine Ansicht des Turboladers aus Fig. 1a gemäß A;
- Fig. 1c: eine Ansicht des Turboladers aus Fig. 1a gemäß B;
- Fig. 1d: eine Teilexplosionszeichnung des Turboladers aus Fig. 1a;
- Fig. 1e: eine schematische Darstellung einer Welle mit Verdichterrad und Turbinenrad;
- Fign. 1f bis 1h: Alternative Fixierungsmöglichkeiten eines Rotormagneten bzw. eines Trägers eines Rotormagneten auf einer Welle;
- Fign. 1i und 1k: Schnitte eines mit Rotormagneten bestückten Trägers;
- Fig. 11: eine schematische Ansicht eines Trägers für Rotormagneten, der an den Außenseiten Flügel zur Vorverdichtung aufweist;

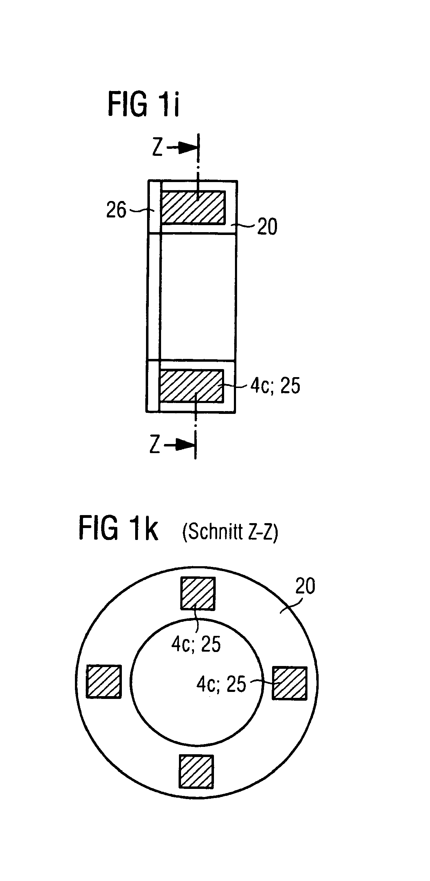

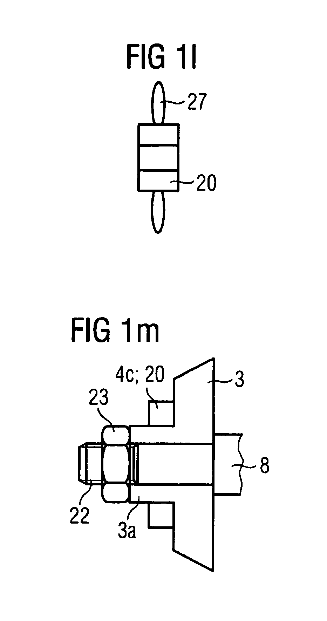

- Fig. 1m: Ausbildung einer Welle als Fortsatz auf einem Verdichterrad;

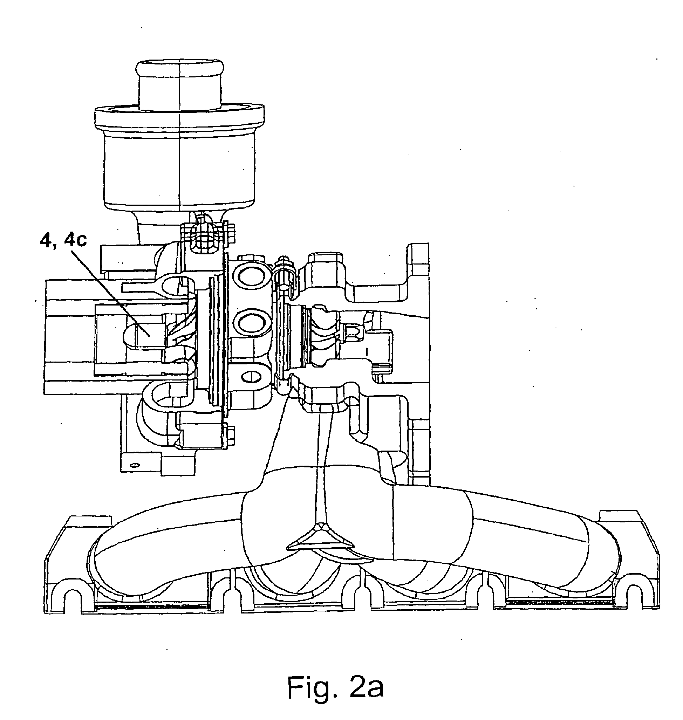

- Fig. 2a: eine weitere Ausführungsform eines erfindungsgemäßen Turboladers im Teilschnitt;

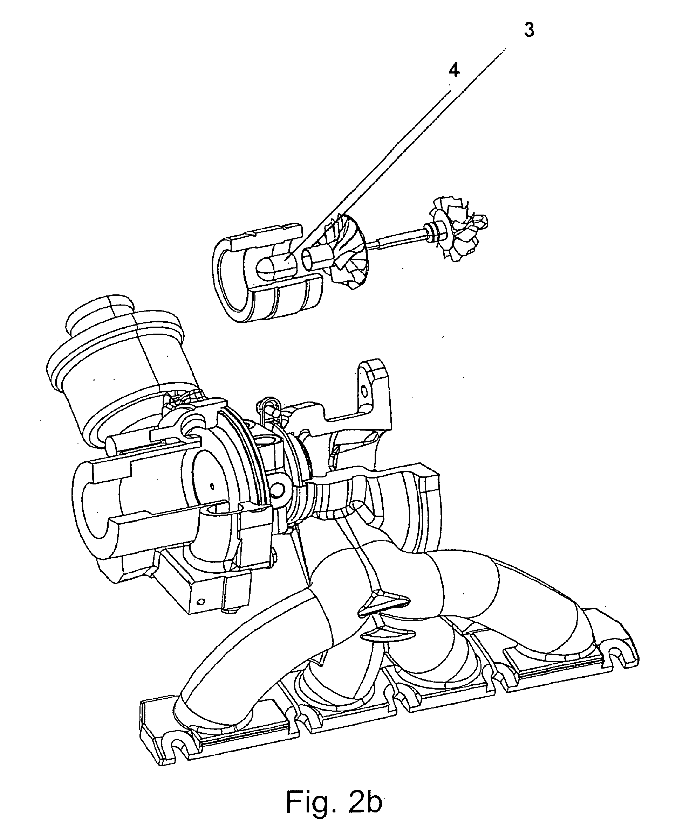

- Fig. 2b: einen Teilexplosionsansicht des Turboladers gemäß Fig.2a;

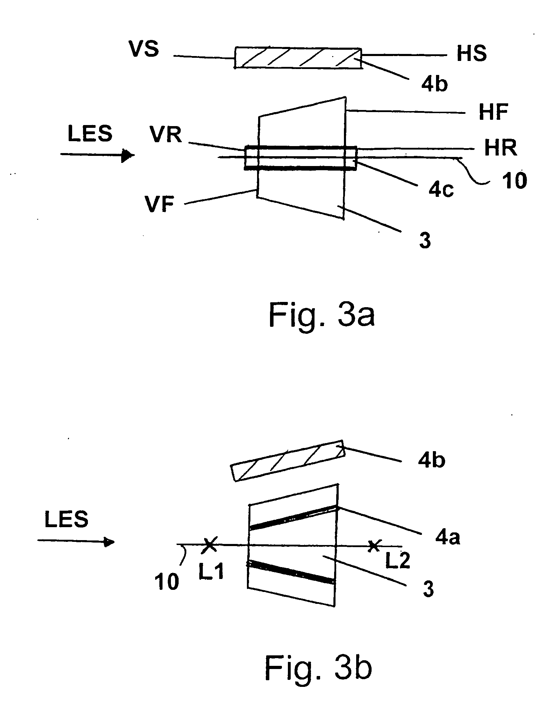

- Fig. 3a: eine Erläuterung der Proportionen und Anordnung von Rotormagnet, Stator und Verdichterrad;
- Fig. 3b: eine Ausführungsform eines Verdichterrades mit geneigtem Rotor und geneigtem Stator;

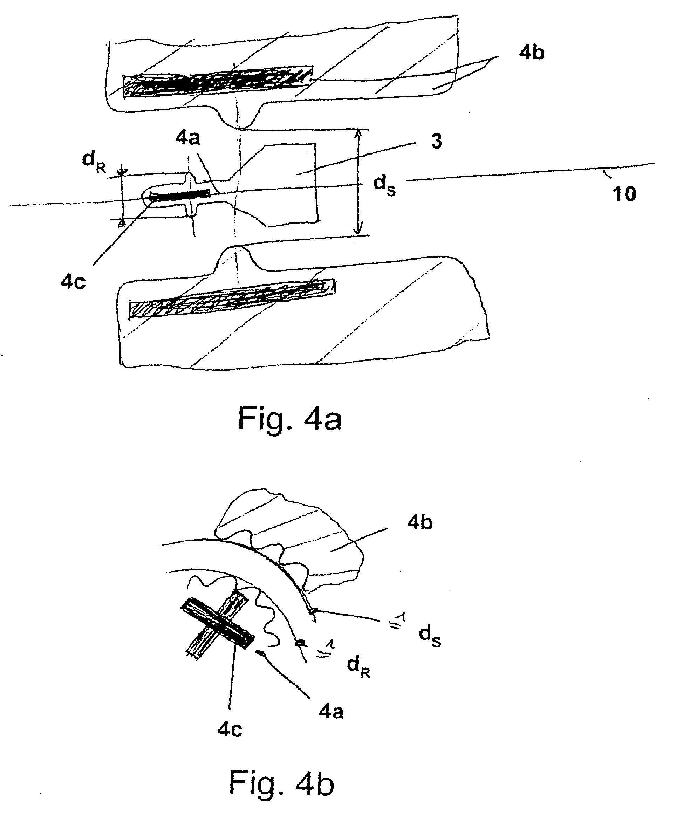

- Fign. 4a bis 4c: eine Erläuterung geometrischer Verhältnisse an erfindungsgemäßen Turboladern.

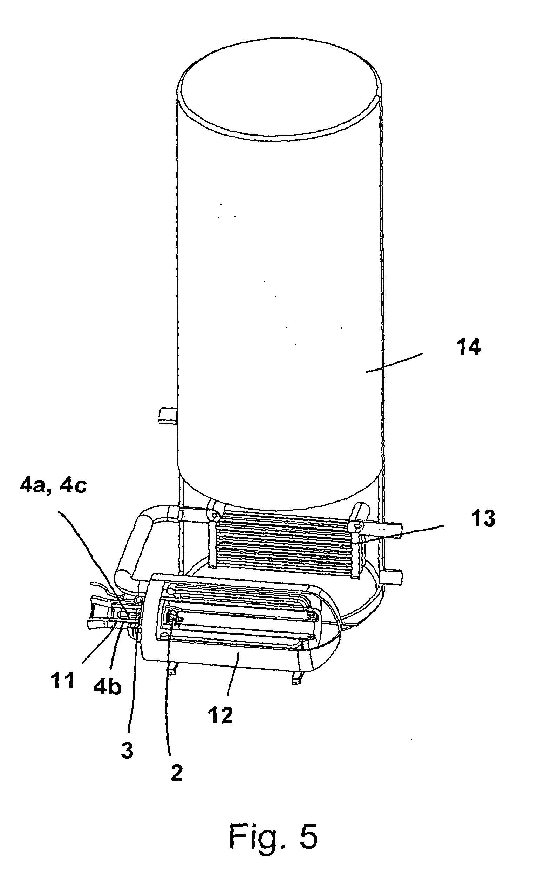

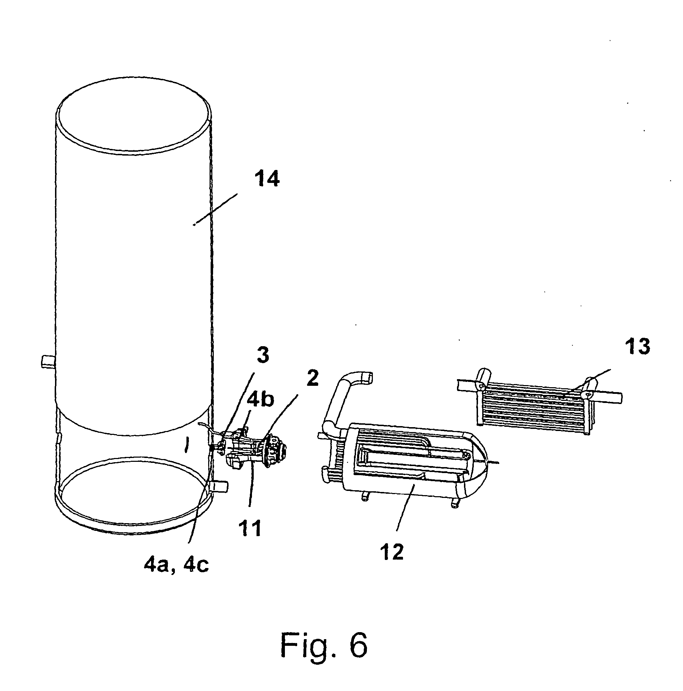

- Fign. 5 und 6: eine weitere Ausführungsform eines erfindungsgemäßen Turboladers als Microturbine für die Energiegewinnung.

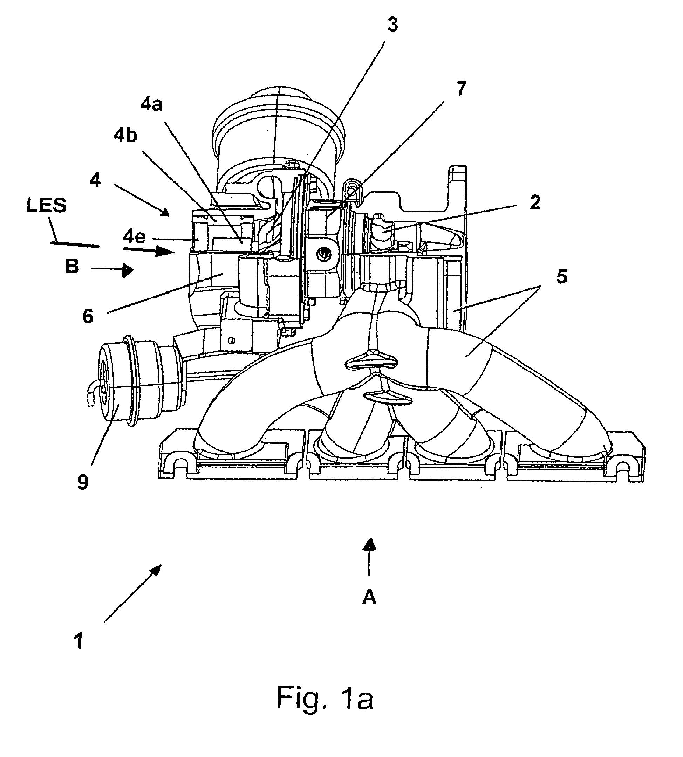

Im Folgenden sollen die Grundzüge der Erfindung anhand der ersten Ausführungsform gemäß Fign. 1a bis 1d gezeigt werden.

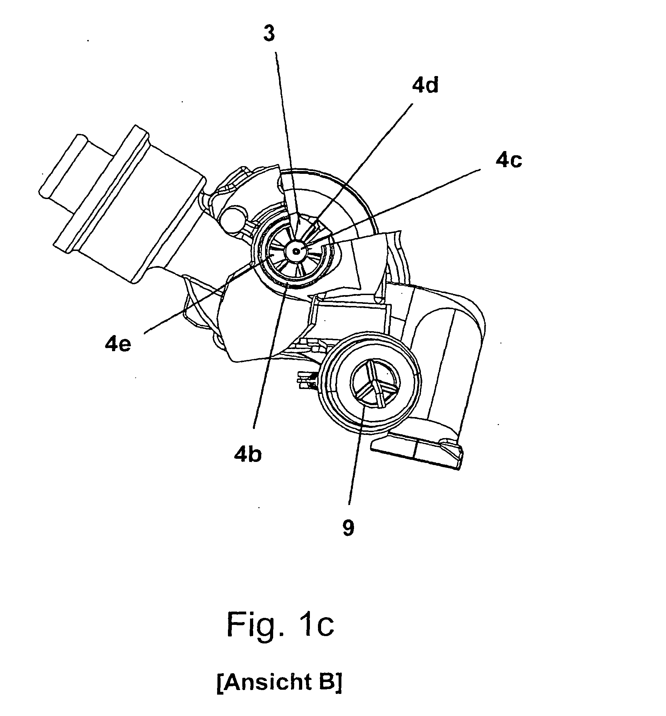

Fign. 1a bis 1d zeigen einen elektrisch modifizierten mechanischen Turbolader 1, der mit einem Turbinengehäuse 5 an einen Verbrennungskraftmotor ankoppelbar ist. Durch den in Fig. 1a gezeigten Abgaskrümmer wird nach der Verbrennung das Abgas gesammelt und zum Antrieb eines Turbinenrades 2 genutzt. Das Turbinenrad 2 ist vom Turbinengehäuse 5 umgeben und ist im Wesentlichen einem herkömmlichen mechanischen Turbolader entnommen. An das Turbinengehäuse 5 schließt sich ein Lagergehäuse 7 und sodann ein Verdichtergehäuse 6 an. In diesem Verdichtergehäuse 6 ist ein Verdichterrad angebracht, das durch eine Einlassöffnung zugeführt Luft (diese Einlassluftöffnung ist insbesondere in Fig. 1c gut zu sehen) mittels eines Verdichterrades 3 verdichtet und auf hier nicht dargstellte Weise zu dem Brennraum des Verbrennungskraftmotors führt. Das Verdichterrad 3 zeigt in Fig. 1a linksseitig einen Fortsatz, an dem ein Rotor 4a eines Elektromotors gegeben ist. Der Rotor 4a ist zentral in der Einlassluftöffnung 4e angebracht. Die Lufteinlassströmungsrichtung ist in Fig. 1a mit LES bezeichnet (hier koaxial zur Achse des Verdichterrades).

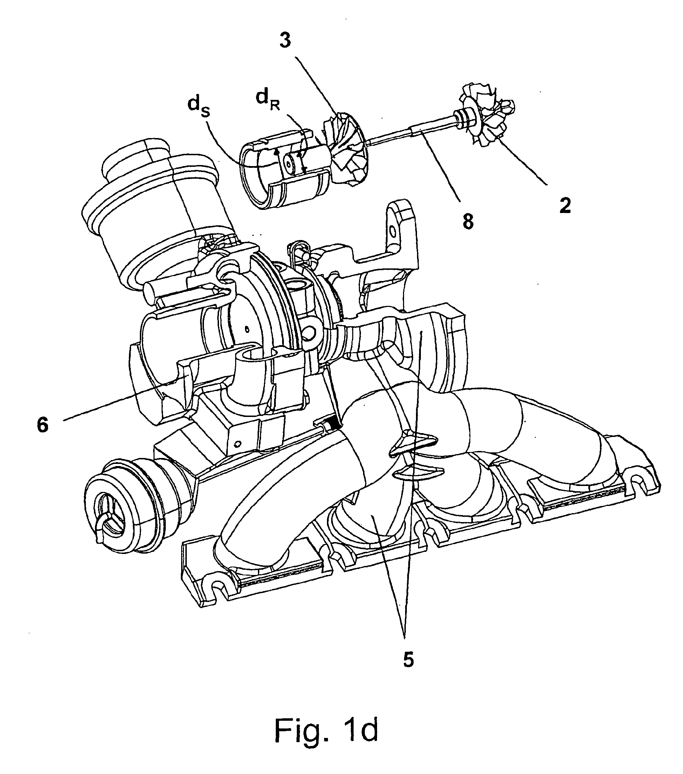

Um den Rotor 4a herum ist ein Stator 4b vorgesehen, der im Wesentlichen eine hohlzylindrische Form aufweist und als Teil der Innenwand des Verdichtergehäuses im Bereich der Einlassluftöffnung dargestellt ist. Vorliegend ist der Stator 4b sogar als Einsatz in eine entsprechende Öffnung vorgesehen, so dass dieser sehr leicht montierbar ist. Vorliegend ist in Fig. 1a also der Rotorspalt zwischen Rotor 4a und Stator 4b die Einlassluftöffnung 4e für das Verdichterrad. Hierbei ist auch gemäß Fig. 1a die Einlassluftöffnung 4e frei von Streben zwischen Rotor und Stator. In dem gezeigten Schnitt ist der kleinste Innendurchmesser des Stators (siehe "d_{S}" in Fig. 1d) beispielsweise 1,5 mal größer als der größte Außendurchmesser d_{R} des Rotors (die Zeichnung ist schematisch und lediglich zur Klarstellung der Größenverhältnisse).

Der Rotor 4a des Elektromotors 4 weist einen Rotormagneten 4c auf, der von einer Armierung umgeben ist (siehe z.B. Fig. 1d). Hierbei ist die Armierung im Wesentlichen "becherförmig" ausgeführt, wobei der Boden des Bechers zum Verdichterrad hin fast vollständig geschlossen ist (abgesehen von einer zentrischen Montagebohrung).

Das Verdichterrad kann (muss aber nicht) aus einem nichtmetallischen Material sein, hier bei einer Ausführung beispielsweise aus einem unverstärkten Kunststoff ist die Beeinflussung des elektromagnetischen Feldes des Elektromotors minimiert. Der Rotormagnet 4c wiederum ist bereichsweise hohl zum Aufstecken auf eine gemeinsame Welle mit dem Verdichterrad. Hier ist in Fig. 1d eine Bohrung 4c des Rotormagneten entsprechend zu sehen. Außerdem ist zu sehen, dass in der Abfolge Rotor (bestehend aus Rotormagnet 4c und Armierung 4d), Verdichterrad 3, Welle 8, Turbinenrad 2 eine Abfolge von Elementen gezeigt ist, die eine thermische Belastung des Elektromotors minimieren. Die Welle 8 ist hierbei in der vorliegenden Ausführungsform so ausgeführt, dass Turbinenrad 2, Verdichterrad 3 sowie Rotor 4a fest (drehfest) miteinander verbunden sind, also durch keine Drehkupplung bzw. Freilauf trennbar sind. Allerdings ist es prinzipiell möglich, eine solche Kupplung im Rahmen der vorliegenden Erfindung vorzusehen, falls beispielsweise die Masse des Turbinenrades 2 sehr hoch ist, hierdurch würde allerdings der konstruktive Aufwand auch wiederum erhöht.

Die Sollspannung des Elektromotors 4 in Fig. 1a beträgt vorliegend 12 V, es sind allerdings auch andere Spannungen (beispielsweise 48 V für Hybridfahrzeuge) möglich.

In Fig. 1d ist ein Turbolader mit einer Verdichteranordnung zur Verdichtung von Frischluft für Verbrennungskraftmotoren gezeigt, enthaltend ein Verdichterrad 3 sowie einen Elektromotor 4 mit Rotor 4a und Stator 4b, wobei ein Rotormagnet 4c des Rotors so ausgebildet ist, dass er partiell oder auch komplett in das Verdichterrad integriert ist bzw. mit diesem verbunden ist und der kleinste Innendurchmesser des Stators 1,5 bis 8 mal so groß ist wie der größte Außendurchmesser des Rotors. Die Anordnung des Rotormagneten, des Stators bzw. des Verdichterrades in axialer Richtung ist hierbei variabel, hierzu wird auf die spätere Fig. 3a insbesondere hingewiesen. Die Masse des Rotormagneten 3c (die Gesamtmasse, auch wenn diese aus mehreren Teilen bestehen sollte) beträgt vorliegend 50 g. Das Massenträgheitsmoment des Rotormagneten bezüglich der Achse des Rotors beträgt 0,6 kgmm².

Das Verhältnis der Querschnittsfläche der Einlassöffnung zur Querschnittsfläche des Rotormagneten (V_{QE}) beträgt 7:1. Das Verhältnis der Querschnittsfläche des Stators zur Querschnittsfläche des Rotormagneten beträgt beispielsweise V_{QS} = 16:1.

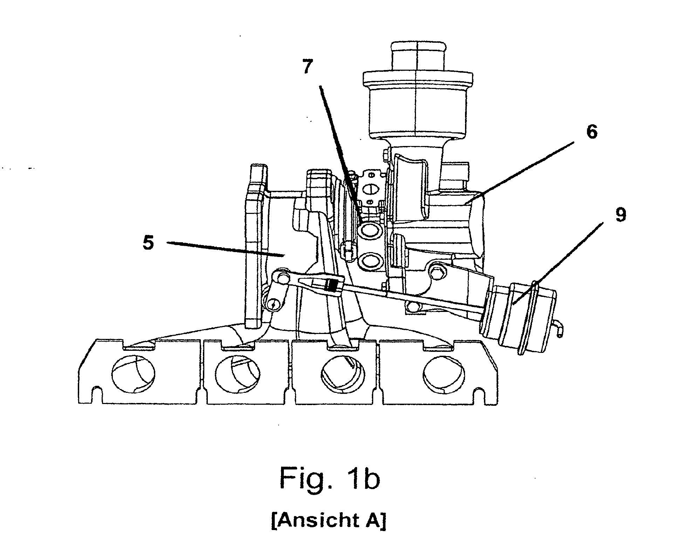

Der Elektromotor ist sowohl im Motorbetrieb (zur Beschleunigung und Vermeidung eines "Turbolochs" als auch im Generatorbetrieb (zur Rückgewinnung von Energie) betreibbar. Erreicht der Ladedruck (im Turbinengehäuse) einen bestimmten Sollwert, wird unter Verwendung eines rückspeisefähigen Umrichters zusätzliche elektrische Energie erzeugt. Idealerweise kann durch dieser energetische Umwandlung der Bremsenergie im Generatorbetrieb auf ein Wastegate/Druckdose zum Abblasen eines überschüssigen Abgasdrucks wie sie in Fig.1b Ziffer 9 dargestellt ist, verzichtet werden.

Der erfindungsgemäße Turbolader findet Anwendung in einem erfindungsgemäßen Antriebssystem für Kraftfahrzeuge, das einen mit dem Turbolader verbundenen Verbrennungskraftmotor sowie einen Speicher für elektrische Energie enthält. Der Elektromotor des Turboladers 1 ist hierbei mit dem Speicher für elektrische Energie verbunden zur Entnahme elektrischer Energie in einem Motorbetrieb des Turboladers 1 und zur Einspeisung elektrischer Energie in einen Generatorbetrieb des Turboladers. In einer besonders bevorzugten Ausführungsform ist der Elektromotor des Turboladers mit einem elektrischen Speicher verbunden, wobei dieser elektrische Speicher zusätzlich mit einem elektromotorischen Antrieb eines Kraftfahrzeugs verbindbar ist. Dies kann ein "Nabenmotor" eines Kraftfahrzeugs sein oder ein anderer Elektromotor, der im Antriebsstrang eines Kraftfahrzeugs (beispielsweise im Bereich des Getriebes) vorgesehen ist. Dieser Anschluss des elektrischen Turboladers an ein "Hybrid"-Fahrzeug ist besonders energieeffizient.

Zur effizienten Steuerung des Antriebssystems bzw. des Turboladers ist eine Steuerelektronik zur Ermittlung der Drehzahl von Turbinenrad 2 oder Verdichterrad 3, Ist-Werten von turbinengehäuseseitigen und verdichtergehäuseseitigen Druckverhältnissen sowie weiteren für den Verbrennungskraftmotor drehmomentrelevanten Werten vorgesehen.

Die wichtigsten Komponenten der ersten Ausführungsform gemäß Fign. 1a bis 1d sind in Fig. 1d, dort oben rechts als Teilexplosionszeichnung gezeigt. Hier ist zu sehen, dass es sich um einen Turbolader 1 handelt, der ein Turbinenrad 2 sowie ein damit verbundenes Verdichterrad 3 aufweist, wobei auf der dem Turbinenrad abgewandten Seite des Verdichterrades ein Elektromotor 4 vorgesehen ist (bestehend aus Rotor 4a und Stator 4b) und einen mit dem Verdichterrad 3 drehfest verbundener Rotor 4a des Elektromotors 4 frei auskragend ausgeführt ist.

Dieses "freie Auskragen" ist vorteilhaft, da damit der konstruktive Aufwand vermindert wird und beispielsweise eine statische Überbestimmung der Gesamtlagerung vermieden wird. Unter "frei auskragend" sollen solche Anordnungen verstanden werden, bei denen der Rotor nicht gesondert und dauernd gelagert wird. Eventuell vorgesehene "Auffangkäfige" etc., die eine zu starke Biegung des frei kragenden Rotors, beispielsweise aufgrund von Biegeresonanzen verhindern sollen, gelten in diesem Sinne nicht als "Läger".

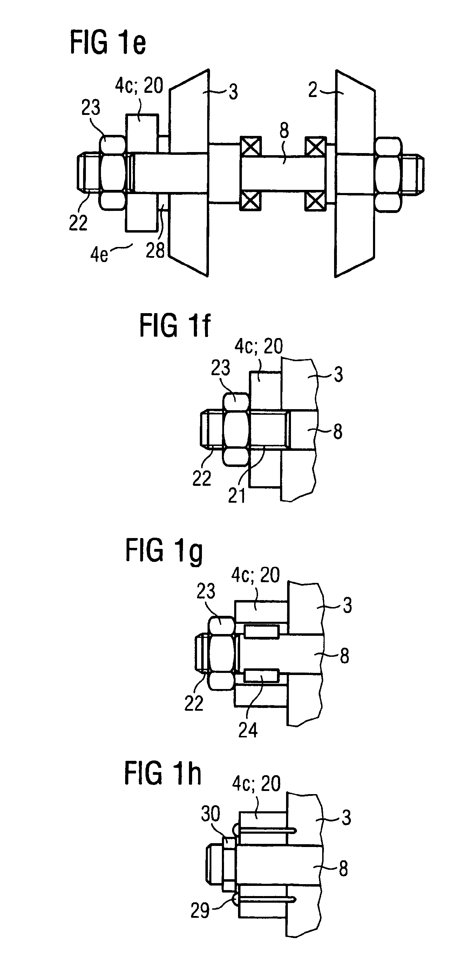

Fig. 1e zeigt eine schematische Darstellung einer erfindungsgemäßen Verdichteranordnung. Hierbei ist die Welle 8 gesondert herausgenommen, die anderen, umgebenden Bauteile sind wie in Fign. 1a bis 1d gezeigt.

Auf der Welle 8 ist ein Turbinenrad 2 rechtsseitig und ein Verdichterrad 3 linksseitig angebracht. Im Bereich zwischen dem Verdichterrad 3 und dem Turbinenrad 2 sind durch gekreuzte Quadrate angedeutete Lager zu sehen. Rechtsseitig ist das Turbinenrad 2 mittels einer Gewindemutter gesichert, linksseitig stößt das Turbinenrad 2 an einen Absatz der Welle an.

Das Verdichterrad 3 stößt rechtsseitig an einen entsprechenden Absatz der Welle 8. Links davon ist ein Distanzelement 28 gezeigt. Links davon ist ein Rotormagnet 4c gezeigt, der hohlzylinderförmig ist und mit der Welle 8 verklebt ist. Durch dieses Verkleben ist ein derartiger Stoffschluss gegeben, dass der Rotormagnet 4c sich mit derselben Geschwindigkeit mit der Welle 8 mitdreht. Alternativ kann das hier bezeichnete Bauteil auch ein Träger 20 sein, der in seinem Inneren einen Rotormagneten 4c hält. Alternativ kann der Rotormagnet 4c bzw. der Träger 20 auch auf die Welle 8 aufgeschrumpft sein, auch ein Versplinten mit der Welle ist möglich. Linksseitig ist dann ein Gewinde 22 gezeigt, auf das eine Gewindemutter 23 aufgebracht ist, um den Rotormagneten bzw. dessen Träger, das Distanzelement 28 sowie das Verdichterrad 3 so zu verspannen, dass hier kein axiales Spiel entsteht.

Fig. 1f zeigt eine alternative Variante, bei der das Verdichterrad 3 rechtsseitig gezeigt ist (ohne Distanzelement 28) und direkt daran anschließen der Rotormagnet bzw. der Träger 4c bzw. 20. Hierbei ist die Welle 8 mit einem Gewinde versehen, auf das der Rotormagnet 4c bzw. der Träger 20 aufgeschraubt ist. Zusätzlich ist noch eine Gewindemutter 23 als Kontermutter aufgeschraubt, um hier zusätzlichen axialen Halt zu geben.

Alternativ zu den hier gezeigten Formen kann auch eine beispielsweise sternförmige Innenverzahnung des Trägers 20 bzw. des Rotormagneten 4c gegeben sein, der auf eine komplementäre Außenform der Welle 8 aufgesteckt wird, um so ein Verdrehen zu verhindern.

Neben den hier gezeigten Ausführungsformen kann (und dies gilt für alle Befestigungsmaßnahmen des Rotormagneten bzw. des Trägers bezüglich der Welle der Rotormagnet auch im Inneren der Welle untergebracht sein bzw. in Verlängerung der Welle untergebracht werden.

Fig. 1g zeigt eine Nutfederanordnung 24, bei der um den Umfang der Welle verteilt insgesamt zwei bis vier Passfedern gezeigt, die in entsprechende Nuten des Rotormagneten 4c bzw. eines entsprechenden Trägers 20 eingreifen. Die axiale Sicherung erfolgt hier wiederum mittels einer Gewindemutter 23 auf dem Gewinde 22.

Fig. 1h zeigt eine weitere Befestigungsform von Träger 20 bzw. Rotormagnet 4c am Verdichterrad 3. Hierbei sind axiale Schrauben 29 vorgesehen, die in das Verdichterrad 3 axial eingreifen (die Schrauben 29 verlaufen parallel zur Welle 8). Zur Sicherheit ist dann nochmals ein Sicherungsring 30 gezeigt, der die Anordnung axial zusätzlich sichert.

Fig. li zeigt einen Querschnitt eines Trägers 20 mit aufgesetztem Deckel 26. Hierbei in Hohlräume 25 des Trägers 20 jeweils einzelne Rotormagneten 4c eingebracht. Diese sind radial um den Umfang des Trägers 20 gleichmäßig verteilt, wie aus dem Schnitt gemäß Z-Z aus Fig. 1k zu sehen ist.

Ein Deckel 26 ist hierbei nicht unbedingt nötig, auch können die Hohlräume 25 beidseitig in axialer Richtung offen gestaltet sein.

Fig. 11 zeigt einen Träger 20 mit radial angeformten Flügeln 27. Hierdurch kann eine zusätzliche Verdichterstufe zu dem eigentlichen Verdichterrad erhalten werden, d.h. der Träger erhält hier eine Zusatzfunktion in Form von Luftverdichtung, zusätzlich zu der Funktion des Tragens des bzw. der Rotormagneten 4c.

Vorliegend ist der Träger 20 aus Kunststoffspritzguss hergestellt, allerdings ist hier auch Metallspritzguss oder anderes Material möglich.

Fig. 1m zeigt ein Verdichterrad 3 mit einem linksseitigen Fortsatz 3a in Form einer Welle. Auf diesen Fortsatz ist ein hohlzylindrischer Rotormagnet bzw. Träger 4c bzw. 20 aufgebracht und verklebt und/oder aufgeschrumpft. Das Verdichterrad selbst ist auf einer Welle 8 aufgeschrumpft und zusätzlich durch eine Gewindemutter 23 auf dem Gewinde 22 gesichert.

Die in Fig. 1e gezeigte Anordnung stellt eine Verdichteranordnung zur Verdichtung von Frischluft für Verbrennungsmotoren, enthaltend ein Verdichterrad 3 sowie ein Elektromotor 4 mit mindestens einem einen Rotormagneten 4c enthaltenden Rotor 4a und mindestens einem Stator 4b sowie einem Rotorspalt zwischen Rotor 4a und Stator 4b dar, wobei der Rotorspalt so ausgestaltet ist, dass bei rotierendem Verdichterrad mindestens 90% des zu verdichtenden Luftmassenstroms durch den Rotorspalt geführt werden, wobei das Verdichterrad 3 an der Welle 8 befestigt ist und mindestens ein Rotormagnet 4c bzw. ein Träger 20 zum Halten des Rotormagneten als gesondertes Bauteil an die Welle 8 montierbar und mit dieser verklebt und anschließend durch eine Mutter 23 auf einem Gewinde 22 der Welle gesichert ist.

Alternativ kann es sich auch um eine Anordnung handeln, bei der der kleinste Innendurchmesser des Stators 1,2- bis 10-mal, vorliegend 2-mal so groß ist wie der größte Außendurchmesser des Rotors (zur Definition dieser Angaben siehe Beschreibungseinleitung).

In einer Variante kann zwischen Stator und Rotor eine Medienlassöffnung gegeben sein und in zumindest einem Querschnitt des Elektromotors das Verhältnis der Querschnittsfläche der Einlassöffnung 4e zur Querschnittsfläche des Rotormagneten 4c zwischen 0,5 und 100, vorliegend bei 5 liegen.

Eine weitere Ausführungsform ist in den Fign. 2a und 2b gezeigt. Hierbei ist der Rotormagnet 4c bei der Herstellung partiell in das Verdichterrad 3 integriert worden. Der Stator bildet die Innenkontur des Verdichtergehäuses.

Der Elektromotor ist sowohl im Motorbetrieb (zur Beschleunigung und Vermeidung eines "Turbolochs" als auch im Generatorbetrieb (zur Rückgewinnung von Energie) betreibbar. Erreicht der Ladedruck (im Turbinengehäuse) einen bestimmten Sollwert, wird unter Verwendung eines rückspeisefähigen Umrichters zusätzliche Energie erzeugt. Durch die energetische Umwandlung der Bremsenergie im Generatorbetrieb kann in dieser Konstruktionsvariante auf ein Wastegate und eine Druckdose zum Abblasen eines überschüssigen Abgasdrucks wie sie in Fig.lb Ziffer 9 dargestellt ist, verzichtet werden.

Fig. 3a zeigt eine schematische Darstellung von Verdichterrad 3, Stator 4b sowie Rotor 4c zur Veranschaulichung geometrischer Verhältnisse. Gezeigt ist das Verdichterrad, das auf einer Achse 10 einseitig oder beidseitig gelagert ist und in einer Lufteinlassströmungsrichtung LES beströmt wird. Die einfließende Luftströmung wird beschleunigt durch das Verdichterrad 3, das eine Förderstruktur F aufweist. Die Vorderkante der Förderstruktur wird durch VF, die Hinterkante der Förderstruktur durch HF gekennzeichnet. Die Vorderkante des Rotormagneten 4c wird mit VR gekennzeichnet, die Hinterkante des Rotormagneten 4c mit HR. Die Vorderkante des Stators wird mit VS, die Hinterkante des Stators mit HS gekennzeichnet (der Stator ist vorliegenden rotationssymmetrisch, es wurde allerdings hier aus Übersichtlichkeitsgründen der obige Statorschnitt gezeigt). Das Verdichterrad 3 hat also eine Förderstruktur F in Form von Schaufeln, wobei die Vorderkanten VF der Förderstruktur in Lufteinlassströmungsrichtung stromabwärts bezüglich einer magnetisch wirksamen Vorderkante des Rotormagneten 4c und einer magnetisch wirksamen Vorderkante VS des Stators liegen. Das Verdichterrad mit seiner Hinterkante HF liegt dagegen in Lufteinlassströmungsrichtung stromaufwärts bezüglich der Hinterkante HR des Rotormagneten 4c sowie der Hinterkante des Stators 4b.

Es sind hier allerdings auch andere Anordnungen möglich, bei denen Rotormagnet bzw. Stator lediglich über eine Kante des Verdichterrades hinausragen, auch ist es möglich, dass der Rotormagnet vollständig innerhalb des Verdichterrades liegt und also seitlich von Kanten der Förderstruktur eingeschlossen wird.

Fig. 3b zeigt eine weitere Ausführungsform, bei der der Stator 4b (dieser ist rotationssymmetrisch bezüglich der Achse 10) bezüglich der Achse 10 geneigt ist. Der Stator hat hier also im Wesentlichen hohlkegelstumpfförmige Form. Entsprechendes gilt auch für den Rotor 4a bzw. den entsprechenden Rotormagneten, auch dieser ist mit seinen Abschnitten geneigt bezüglich der Achse 10 (also nicht parallel/kolinear, sondern würde diese in Verlängerung schneiden.

Das in Fig. 3b gezeigte Verdichterrad ist beidseitig gelagert (siehe angedeutete Lagerstellen L1 und L2). Allerdings können auch die 'Ausführungsformen der weiteren Figuren prinzipiell beidseitig gelagert sein (auch wenn dies u.U. baulichen Mehraufwand bedeutet).

Für die Fig. 3b gilt, dass der Rotormagnet 4c bezogen auf die Achse 10 des Verdichterrades 3 radial außerhalb der Nabe des Verdichterrades angeordnet ist. Das Verdichterrad ist hierbei so ausgeführt, dass Luft sowohl radial innerhalb als auch radial außerhalb des Rotormagneten führbar ist. Hierbei ist das Verdichterrad auch so ausgeführt, dass mindestens 70% der zugeführten Luftmasse (bzw. des zugeführten Luftmassenstroms) radial außerhalb des Rotormagneten geführt werden.

Fig. 4a und 4b dienen der Verdeutlichung der Bestimmung der Durchmessermaße bei nicht durchweg gleichförmigen Geometrien.

Fig. 4a macht klar, dass der größte Durchmesser d_{R} des Rotors an der Stelle gemessen wird, an der dieser Rotor (aber nur im Bereich der Ausdehnung des Rotormagneten) seine größte Ausdehnung hat. Eine spätere Rotorverbreiterung im Bereich des Verdichterrades 3 geht hier nicht ein, da der Rotormagnet dort nicht weitergeführt ist.

Entsprechend ist auch der Stator an der engsten Stelle gemessen (siehe d_{S}) über die sich das entsprechende elektrisch bzw. magnetisch wirksame Bauteil des Stators (angedeutet durch den schwarzen Balken der einen Blechkern mit Kupferdraht zeigt) erstreckt.

Fig. 4b zeigt eine nähere Erläuterung für nichtkreisrunde Querschnitte. Mit "größter Außendurchmesser" des Rotormagneten ist der Durchmesser gemeint, der den kleinsten umschreibenden Kreis um den Gesamtrotor zeigt (zur axialen Positionierung, siehe oben, Beschreibung zu 4a). Die in Fig. 4b gezeigte wellige Außenlinie ist nicht kreisrund, der umbeschriebene Kreis tangiert im Wesentlichen herausragende Stellen des Außenrotors.

Entsprechendes gilt für den Stator 4b, der ebenfalls keine kreisrunde Form hat. Hier wird der größte einbeschriebene Kreis als Durchmesser d_{S} angenommen.

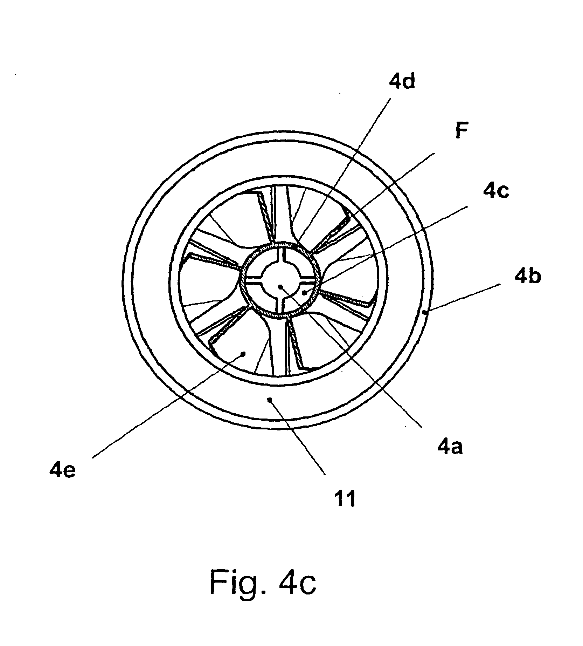

Fig. 4c zeigt nochmals einen Querschnitt durch einen erfindungsgemäßen Stator 4b und Rotor 4a. Zu sehen ist hier ein Rotormagnet 4c, der aus einzelnen Segmenten (drei über den Umfang verteilt) besteht. Alternativ hierzu ist natürlich auch ein z.B. zylindrischer Einzelmagnet vorstellbar. Um diesen Rotormagneten 4c herum ist eine Armierung 4d angebracht. Auf dieser Armierung wiederum ist eine Förderstruktur F (hier im Schnitt, deshalb schraffiert) gezeigt. Um die Förderstruktur herum ist eine Luftdurchführung bzw. Mediendurchlassöffnung 4e gegeben, diese wird radial nach außen von einer Abschirmung 11 (diese ist aus Kunststoff und magnetisch/elektrisch isolierend) umgeben. Um die Abschirmung 11 herum ist der elektrisch wirksame Teil des Stators 4b gegeben.

In dem in Fig. 4c gezeigten Querschnitt beträgt die Querschnittsfläche der Mediendurchlassöffnung bzw. des Luftdurchtrittes bzw. der Einlassöffnung 4e zur Querschnittsfläche der vier Segmente des Rotormagneten (definiert als V_{QE} = A_{Einlassöffnung}/A_{Rotormagnet}) = 4:1.

Die Einlassöffnung 4e ist hierbei definiert als tatsächlich durchströmbare Öffnung, also der Flächeninhalt innerhalb der Armierung 11, jedoch abzüglich der Flächen der schraffierten Förderstruktur sowie der Nabe des Rotors (die Nabe umfasst die Armierung 4d sowie alles darin Befindliche). Gemeint ist hier also die "Nettoquerschnittfläche" der Einlassöffnung. Der Querschnitt verläuft in der Fig. 5c sichtbar durch den elektrisch und magnetisch wirksamen Abschnitt des Stators 4b. In diesem Querschnitt beträgt das Verhältnis der Querschnittsfläche des Stators zur Querschnittsfläche des Rotormagneten (definiert als V_{QS} = A_{Stator}/A_{Rotormagnet}) = 13:1.

Als Querschnittsfläche des Stators wird hier lediglich der elektrisch bzw. magnetisch wirksame Teil (also Kernmetall + Kupferdraht, allerdings abzüglich Kupferdrahtlackierung sowie möglicher "Hohlflächen") verstanden. Entsprechend verhält es sich bei dem Rotormagneten, hier sind nur die Querschnitte der reinen Rotormagnetsegmente in diesem Querschnitt heranzuziehen.

Die oben genannten Verhältnisse für die Beziehung des kleinsten Innendurchmessers des Stators zum größten Außendurchmesser des Rotors können in Ergänzung zu dem 1,5- bis 8-fachen) auch in anderen Intervallen liegen, nämlich 1,1- bis 1,49-mal, vorzugsweise 1,25- bis 1,49-mal. Entsprechend kann allerdings am anderen Ende der Skala auch der kleinste Innendurchmesser des Stators 8,01- bis 15-mal, vorzugsweise 8,01- bis 12-mal so groß sein wie der größte Außendurchmesser des Rotors.

Sämtliche in den Figuren gezeigten Turbolader enthalten mindestens ein Verdichterrad 3 zum Verdichten von Luft und sind mit dem Elektromotor 4 antreibbar, wobei zwischen Rotor 4a und Stator 4b des Elektromotors ein Rotorspalt angeordnet ist und mindestens 50%, vorzugsweise mindestens 90% des dem Verdichterrad zugeführten Luftmassenstroms in mindestens einem Betriebszustand des Turboladers durch den Rotorspalt geführt werden. Bei den Darstellungen in den Figuren ist dieser Betriebszustand bei einer Drehzahl zwischen 5000 und 300000 U/min, vorzugsweise zwischen 40000 und 200000 U/min, vorliegend bei 100000 U/min gegeben. Die Drehzahl der Kurbelwelle eines angeschlossenen Hubkolbenmotorsmotors beträgt hierbei zwischen 100 und 15000 U/min, vorzugsweise zwischen 1500 und 8000 U/min, vorliegend beispielsweise 2500 U/min.

Fign. 5 und 6 zeigen den erfindungsgemäßen Turbolader als Grundmodul einer Mikroturbine für die Kraft-Wärme-Kopplung. Fig. 5 zeigt den Grundaufbau, Fig. 6 eine erläuternde Explosionsansicht. Ein Elektromotor/Generator ist mit dem Bezugszeichen 11 gekennzeichnet, ein Rekuperator mit dem Bezugszeichen 12, ein Wärmetauscher mit dem Bezugszeichen 13 und ein Wärmespeicher mit dem Bezugszeichen 14. In den Figuren sind daher die maßgeblichen Teile (Rotor, Stator, Verdichterrad, Turbinenrad) mit denselben Bezugszeichen wie in den vorhergehenden Ausführungsbeispielen gekennzeichnet. Die Funktionsweise ist, in anderen Worten formuliert, wie folgt (wichtig ist hier nicht primär die Funktion der Kraft-Wärme-Kopplung, sondern die Tatsache, dass der erfindungsgemäße Turbolader, der hier ein Verdichterrad und ein Turbinenrad zeigt, auch außerhalb des Automobils eingesetzt werden kann.

Die Verbrennungsluft strömt vollständig zwischen Rotor und Stator des Elektromotors/Generators 11 in den Verdichter. Durch die dort erfolgte Verdichtung auf ca. 4bar erwärmt sich die Verbrennungsluft bereits auf ca. 200°C. Aus dem Verdichter wird die erwärmte Verbrennungsluft in einen ersten Wärmetauscher geleitet und durch die vorbeiströmenden heißen Abgase auf ein Temperaturniveau von ca. 500°C angehoben. In einer nachgeschalteten Brennkammer wird die Verbrennungsluft gemeinsam mit einem Brennstoff z.B. regenerativem Gas verbrannt. Die so entstandenen heißen Gase werden in der Turbine entspannt und treiben das Turbinenrad und somit den Verdichter sowie den Generator an. Die Wärmeenergie des Abgases wird teilweise in dem Wärmetauscher direkt wieder an die komprimierte Verbrennungsluft abgegeben. Darüber hinaus kann dieser erfindungsgemäße Turbolader mit einem zweiten Wärmetauscher gekoppelt werden um die gesamte Restwärme zur Warmwassererzeugung zu nutzen oder sie einem Heizkreis z.B. für die Gebäudetemperierung zuzuführen. Zum Starten des Prozesses kann der Generator als Elektromotor verwendet. Somit können mit dem erfindungsgemäßen Turbolader beispielsweise kostengünstige kleine Blockheizkraftwerke erzeugt werden, deren wesentlichen Komponenten aus Grosserienbauteile aus der Automobilindustrie bestehen. Durch den schwingungsarmen Lauf wird die Geräuschemission sowie die Körperschallübertragung in angrenzende Gebäude vermieden. Durch die kompakte Bauweise und das geringe Gewicht eignet sich das Modul auch als Hilfsantrieb zur Stromerzeugung in Flugzeugen.

## Patentansprüche

1. Verdichteranordnung zur Verdichtung von Frischluft für Verbrennungsmotoren, enthaltend ein Verdichterrad (3) sowie einen Elektromotor (4) mit mindestens einem einen Rotormagneten (4c) enthaltenden Rotor (4a) und mindestens einem Stator (4b) sowie einem Rotorspalt zwischen Rotor (4a) und Stator (4b), wobei das Verdichterrad (3) an einer Welle (3) befestigt ist oder diese Welle (3a) enthält und mindestens ein Rotormagnet (4c) oder ein Träger (20) zum Halten des Rotormagneten als gesondertes Bauteil an diese Welle montierbar und mit dieser verschraubbar, aufpressbar, versplintbar, verklebbar, verlötbar, verschweißbar, umspritzbar, auf diese Welle aufschrumpfbar, in die Welle einschrumpfbar oder durch Formschluss gegen Verdrehen an dieser Welle sicherbar ist **dadurch gekennzeichnet, dass** der Rotorspalt so ausgestaltet ist, dass bei rotierendem Verdichterrad mindestens 50%, vorzugsweise mindestens 90%, besonders vorzugsweise 100% des zu verdichtenden Luftmassenstroms durch den Rotorspalt geführt werden.

2. Anordnung nach Anspruch 1, **dadurch gekennzeichnet, dass** die Welle (8), auf der das Verdichterrad befestigt ist, außerdem ein Turbinenrad (2) trägt.

3. Anordnung nach Anspruch 2, **dadurch gekennzeichnet, dass** die Lagerung der Welle zwischen Verdichterrad (3) und Turbinenrad (2) angeordnet ist.

4. Anordnung nach einem der vorhergehenden Ansprüche, **dadurch gekennzeichnet, dass** die Welle (8) ein Gewinde aufweist zum Verschrauben des Verdichterrades (3), des Rotormagneten (4c) und/oder des Trägers (20) des Rotormagneten.

5. Anordnung nach einem der vorhergehenden Ansprüche, **dadurch gekennzeichnet, dass** die Welle ein Gewinde (22) aufweist zum Anbringen einer Gewindemutter (23) zum Kontern und/oder Sichern des Verdichterrades (3), des Rotormagneten (4c) und/oder des Trägers (20) des Rotormagneten.

6. Anordnung nach einem der vorhergehenden Ansprüche, **dadurch gekennzeichnet, dass** der Formschluss des Verdichterrades (3), des Rotormagneten (4c) und/oder des Trägers (20) des Rotormagneten durch eine Innenverzahnung, die zu einer Außenverzahnung der Welle komplementär ist, besteht.

7. Anordnung nach einem der vorhergehenden Ansprüche, **dadurch gekennzeichnet, dass** der Formschluss des Verdichterrades, des Rotormagneten und/oder des Trägers des Rotormagneten einerseits und der Welle andererseits durch eine Nut-Feder-Verbindung (24) gegeben ist.

8. Anordnung nach einem der vorhergehenden Ansprüche, **dadurch gekennzeichnet, dass** zwischen Verdichterrad (3) einerseits und Rotormagnet (4c), Träger (20) des Rotormagneten und/oder einer Gewindemutter (23) andererseits in axialer Richtung ein Distanzelement angeordnet ist.

9. Anordnung nach einem der vorhergehenden Ansprüche, **dadurch gekennzeichnet, dass** Verdichterrad (3) einerseits und Rotormagnet (4c) und/oder Träger (20) des Rotormagneten andererseits in axialer (siehe Fig. 1h) und/oder radialer Richtung miteinander verschraubt sind.

10. Anordnung nach einem der vorhergehenden Ansprüche, **dadurch gekennzeichnet, dass** Rotormagnet (4c) und/oder Träger (20) des Rotormagneten durch mindestens einen Splint gegen radiales und/oder axiales Verschieben sicherbar sind.

11. Anordnung nach einem der vorhergehenden Ansprüche, **dadurch gekennzeichnet, dass** der Träger (20) des Rotormagneten aus Kunststoff oder Metall ist.

12. Anordnung nach einem der vorhergehenden Ansprüche, **dadurch gekennzeichnet, dass** der Träger (20) des Rotormagneten mindestens einen Hohlraum (25) zum Einsetzen des mindestens einen Rotormagneten aufweist.

13. Anordnung nach Anspruch 12, **dadurch gekennzeichnet, dass** mehrere Hohlräume (25) zum Einsetzen von Rotormagneten (4c) vorgesehen sind, wobei diese Hohlräume radial um die Welle herum angeordnet sind (Fig. 1k).

14. Verdichteranordnung zur Verdichtung von Frischluft für Verbrennungskraftmotoren, enthaltend ein Verdichterrad (3) sowie einen Elektromotor (4), mit Rotor (4a) und Stator (4b), wobei der Rotor mindestens einen Rotormagneten aufweist, wobei das Verdichterrad (3) an einer Welle (8) befestigt ist oder diese Welle (3a) enthält und mindestens ein Rotormagnet (4c) oder ein Träger (20) zum Halten des Rotormagneten als gesondertes Bauteil an dieser Welle (3a, b) montierbar ist und mit dieser verschraubbar, versplintbar, verklebbar, auf diese Welle aufschrumpfbar oder durch Formschluss gegen Verdrehen an dieser Welle sicherbar ist, dadurch genkennzeichnet, dass der kleinste Innendurchmesser des Stators 1,2-mal bis 10-mal und 1,5- bis 8-mal so groß ist wie der größte Außendurchmesser des Rotors.

## Claims

1. A compressor arrangement for compressing fresh air for internal combustion engines, containing a compressor wheel (3) and an electric motor (4) with at least one rotor (4a) containing a rotor magnet (4c), and at least one stator (4b), and a rotor gap between the rotor (4a) and the stator (4b), the compressor wheel (3) being fastened to a shaft (8) or containing this shaft (3a), and at least one rotor magnet (4c) or a support (20) for holding the rotor magnet being able to be mounted on this shaft as a separate component and being able to be screw-connected, pressed on, fixed with a cotter pin, glued, soldered, welded or sheathed thereto, able to be shrunk onto this shaft, able to be shrunk into the shaft or able to be secured against twisting on this shaft by a positive lock,
**characterised in that** the rotor gap is configured such that when the compressor wheel is rotating at least 50%, preferably at least 90%, particularly preferably 100% of the air mass flow which is to be compressed is guided through the rotor gap.

2. An arrangement according to Claim 1, **characterised in that** the shaft (8) to which the compressor wheel is fastened furthermore bears a turbine impeller (2).

3. An arrangement according to Claim 2, **characterised in that** the bearing of the shaft is arranged between the compressor wheel (3) and the turbine impeller (2).

4. An arrangement according to one of the preceding claims, **characterised in that** the shaft (8) has a thread for screw-connecting the compressor wheel (3), the rotor magnet (4c) and/or the support (20) of the rotor magnet.

5. An arrangement according to one of the preceding claims, **characterised in that** the shaft has a thread (22) for attaching a threaded nut (23) for locking and/or securing the compressor wheel (3), the rotor magnet (4c) and/or the support (20) of the rotor magnet.

6. An arrangement according to one of the preceding claims, **characterised in that** the positive lock of the compressor wheel (3), the rotor magnet (4c) and/or the support (20) of the rotor magnet consists by a set of internal teeth which are complementary to a set of external teeth of the shaft.

7. An arrangement according to one of the preceding claims, **characterised in that** the positive lock of the compressor wheel, the rotor magnet and/or the support of the rotor magnet on one hand and the shaft on the other hand is provided by a tongue-and-groove connection (24).

8. An arrangement according to one of the preceding claims, **characterised in that** a spacer element is arranged in the axial direction between the compressor wheel (3) on one hand and the rotor magnet (4c), support (20) of the rotor magnet and/or a threaded nut (23) on the other hand.

9. An arrangement according to one of the preceding claims, **characterised in that** the compressor wheel (3) on one hand and the rotor magnet (4c) and/or support (20) of the rotor magnet on the other hand are screwed together in the axial (see Fig. 1h) and/or radial direction.

10. An arrangement according to one of the preceding claims, **characterised in that** the rotor magnet (4c) and/or support (20) of the rotor magnet can be secured against radial and/or axial displacement by at least one cotter pin.

11. An arrangement according to one of the preceding claims, **characterised in that** the support (20) of the rotor magnet is made of plastics material or metal.

12. An arrangement according to one of the preceding claims, **characterised in that** the support (20) of the rotor magnet has at least one cavity (25) for inserting the at least one rotor magnet.

13. An arrangement according to Claim 12, **characterised in that** a plurality of cavities (25) for inserting rotor magnets (4c) are provided, these cavities being arranged radially around the shaft (Fig. 1k).

14. A compressor arrangement for compressing fresh air for internal combustion engines, containing a compressor wheel (3) and an electric motor (4), with a rotor (4a) and a stator (4b), the rotor having at least one rotor magnet, the compressor wheel (3) being fastened to a shaft (8) or containing this shaft (3a), and at least one rotor magnet (4c) or a support (20) for holding the rotor magnet being able to be mounted on this shaft (3a, b) as a separate component and being able to be screw-connected, fixed with a cotter pin or glued thereto, able to be shrunk onto this shaft or able to be secured against twisting on this shaft by a positive lock, **characterised in that** the smallest internal diameter of the stator is 1.2 times to 10 times and 1.5 to 8 times as large as the largest external diameter of the rotor.

## Revendications

1. Système de compresseur pour la compression d'air frais pour des moteurs à combustion, comprenant une roue de compresseur (3) ainsi qu'un moteur électrique (4), avec au moins un rotor (4a) contenant un aimant de rotor (4c) et au moins un stator (4b), ainsi qu'une fente entre le rotor (4a) et le stator (4b), dans lequel
la roue de compresseur (3) est fixée à un arbre (8) ou contient cet arbre (3a), et au moins un aimant de rotor (4c) ou un support (20) peut être monté en tant que pièce séparée sur cet arbre, pour le maintien de l'aimant de rotor, et peut être vissé, assemblé par pression, goupillé, collé, brasé, soudé, surmoulé avec celui-ci, fretté sur cet arbre, emmanché dans cet arbre ou fixé à cet arbre par complémentarité de forme sans rotation,
**caractérisé en ce que**
la fente est conçue de manière à ce qu'au moins 50%, de préférence au moins 90% et même 100% du flux massique d'air à comprimer soit guidé par la fente pendant la rotation de la roue de compresseur.

2. Système selon la revendication 1, **caractérisé en ce que** l'arbre (8) sur lequel est fixée la roue de compresseur porte en outre une roue de turbine (2).

3. Système selon la revendication 2, **caractérisé en ce que** le palier de l'arbre est agencé entre la roue de compresseur (3) et la roue de turbine (2).

4. Système selon l'une des revendications précédentes, **caractérisé en ce que** l'arbre (8) comporte un filet pour le vissage de la roue de compresseur (3), de l'aimant de rotor (4c) et/ou du support (20) de l'aimant de rotor.

5. Système selon l'une des revendications précédentes, **caractérisé en ce que** l'arbre comporte un filet (22) destiné à fixer un écrou (23), pour le blocage et/ou la fixation de la roue de compresseur (3), de l'aimant de rotor (4c) et/ou du support (20) de l'aimant de rotor.

6. Système selon l'une des revendications précédentes, **caractérisé en ce que** l'assemblage par complémentarité de forme entre la roue de compresseur (3), l'aimant de rotor (4c) et/ou le support (20) de l'aimant de rotor (20) est réalisé par une denture interieure qui est complementaire à une denture exterieure de l'arbre.

7. Système selon l'une des revendications précédentes, **caractérisé en ce que** l'assemblage par complémentarité de forme entre la roue de compresseur, l'aimant de rotor et/ou le support de l'aimant de rotor d'une part et l'arbre d'autre part est réalisé par un assemblage rainure-languette (24).

8. Système selon l'une des revendications précédentes, **caractérisé en ce qu'**un élément d'espacement est agencé dans la direction axiale entre la roue de compresseur (3) d'une part et l'aimant de rotor (4c), le support (20) de l'aimant de rotor et/ou un écrou fileté (23) d'autre part.

9. Système selon l'une des revendications précédentes, **caractérisé en ce que** la roue de compresseur (3) d'une part et l'aimant de rotor (4c) et/ou le support (20) de l'aimant de rotor d'autre part sont vissés les uns avec les autres dans la direction axiale (voir Fig. lh) et/ou radiale.

10. Système selon l'une des revendications précédentes, **caractérisé en ce que** l'aimant de rotor (4c) et/ou le support (20) de l'aimant de rotor peuvent être bloqués contre un déplacement radial et/ou axial par au moins une goupille fendue.

11. Système selon l'une des revendications précédentes, **caractérisé en ce que** le support (20) de l'aimant de rotor est en plastique ou en métal.

12. Système selon l'une des revendications précédentes, **caractérisé en ce que** le support (20) de l'aimant de rotor comporte au moins un espace creux (25) pour l'insertion de l'au moins un aimant de rotor.

13. Système selon la revendication 12, **caractérisé en ce que** plusieurs espaces creux (25) sont prévus pour l'insertion d'aimants de rotor (4c), ces espaces creux étant agencés radialement autour de l'arbre (Fig. 1k).

14. Système de compresseur pour la compression d'air frais pour des moteurs à combustion, comprenant une roue de compresseur (3) ainsi qu'un moteur électrique (4), avec un rotor (4a) et un stator (4b), dans lequel le rotor comporte au moins un aimant de rotor,
dans lequel la roue de compresseur (3) est fixée à un arbre (8) ou contient cet arbre (3a), et au moins un aimant de rotor (4c) ou un support (20) peut être monté en tant que pièce séparée sur cet arbre, pour le maintien de l'aimant de rotor, et peut être vissé, goupillé, collé avec celui-ci, fretté sur cet arbre ou fixé à cet arbre par complémentarité de forme sans rotation,
**caractérisé en ce que**
le plus petit diamètre intérieur du stator est 1,2 à 10 fois et 1,5 à 8 fois plus grand que le plus grand diamètre extérieur du rotor.
